(19) Europäisches Patentamt / European Patent Office / Office européen des brevets

(11) **EP 1 057 299 B1**

(12) **EUROPEAN PATENT SPECIFICATION**

(45) Date of publication and mention
of the grant of the patent:
**03.07.2013 Bulletin 2013/27**

(51) Int Cl.:
**H04L 9/32** (2006.01)

(21) Application number: **99908171.4**

(86) International application number:
**PCT/US1999/003275**

(22) Date of filing: **19.02.1999**

(87) International publication number:
**WO 1999/043120 (26.08.1999 Gazette 1999/34)**

(54) **INFORMATION ACCESS CONTROL SYSTEM AND METHOD**

VERFAHREN UND VORRICHTUNG ZUR INFORMATIONSZUGRIFFSKONTROLLE

SYSTEME ET PROCEDE DE CONTROLE D'ACCES A DES INFORMATIONS

(84) Designated Contracting States:
**AT BE CH CY DE DK ES FI FR GB GR IE IT LI LU MC NL PT SE**

(30) Priority: **20.02.1998 US 75433 P**
**15.04.1998 US 81766 P**
**15.04.1998 US 81739 P**
**25.11.1998 US 110021 P**
**15.01.1999 US 116002 P**
**25.08.1998 US 97845 P**

(43) Date of publication of application:
**06.12.2000 Bulletin 2000/49**

(73) Proprietor: **Google Inc.**
**Mountain View, CA 94043 (US)**

(72) Inventors:
• **GOLDSCHLAG, David, M.**
**Silver Spring, MD 20902 (US)**
• **KRAVITZ, David, W.**
**Fairfax, VA 22030 (US)**

(74) Representative: **Rickard, David John et al**
**Ipulse**
**Carrington House**
**126-130 Regent Street**
**London**
**W1B 5SE (GB)**

(56) References cited:
**WO-A-96/06504**      **US-A- 4 935 962**
**US-A- 5 694 471**      **US-A- 5 757 918**

**Description**

**Field Of The Invention**

The present invention relates to an information access system and method for preventing an unauthorized access to information. More particularly, the present invention relates to an apparatus and method for using a renewable component to authorize access to information. More particularly still, the invention relates to a method and apparatus for controlling the interaction between a backend system and devices for generating and processing information.

**Background Of The Invention**

Preventing unauthorized access to information is an important problem in numerous applications. The present invention broadly relates to and provides a solution to this problem. In some commercial applications, where the information includes, for example, valuable audio or video information, unauthorized access by those who obtain the information reduces the profit margin of the information provider(s), who typically provide the information, e.g. to various listener and/or viewers, for a fee. While the description which follows may sometimes use audio/video context as an example of information to be provided, the invention is not so limited and may equally apply to any type of information or content data from any source, such as audio and/or video data or other type of data or executables. The unauthorized assessor is an information pirate, and can pose a serious threat to an information provider by inducing others to pirate the information as well. More particularly, the pirate can generally sell pirated access to the information at a lower cost than the legitimate information provider because the pirate obtains access to the information by using the legitimate provider's infrastructure and therefore does not have to invest resources to produce and disseminate the information. This becomes even a greater concern where the pirate can copy and mass produce a relatively inexpensive component which allows a large number of users to obtain access to the information without authorization by the legitimate information provider. As a result, information providers have resorted to increasingly expensive and complex schemes to prevent unauthorized access to their information content, i.e. to prevent pirating.

One plan for controlling access to information involves the use of an IRD (integrated receiver device) with smart cards as a security module. This plan was proposed by Fiat and Schamir in a paper titled "How To Prove Yourself: Practical Solutions To Identification And Signature Problems" The Weizmann Institute of Science, Rehovot Israel (1986), and involves the use a trusted center to encode a smart card with personal information and secret values relating to the access. The smart card proves its identify to a verifier (IRD) which in turn must have knowledge of the secret values used to place the information onto the smart card. While the Fiat-Schamir plan is designed to make it difficult to forge personal information of one card, it does not prevent mass distribution of the forged card when and if the pirate has broken the smart card secrets used to prove identity. Also see U.S. Patent No. 4,748,688 to Schamir.

Another approach is described in U.S. patent 5,481,609 to Cohen et al, which uses a smart card in a system for controlling access to broadcast transmissions. Cohen uses a verifier function in an IRD to authenticate the authenticity of a smart card, a secret-learning operation, and a blacklisting operation which prevents previously detected illegal cards from gaining access. However, as indicated by the presence of the blacklisting operation, the system proposed in Cohen can talk to any smart card that is not on the blacklist, and is thus susceptible to a pirated card (or a plurality of pirated cards) that has not yet been blacklisted. Furthermore, the verification process proposed by Cohen is triggered by the broadcast source. Thus, a pirate could simply remove the verification commands from the broadcast stream thereby circumventing the verification process altogether. Another practical problem resulting from use of the broadcast source to trigger the verification process is an architectural one whereby what should be a local level decision (when and whether to challenge a smart card) is turned into a system level decision. Finally, the verification process in Cohen is not tied to the transartinn between the smart card and the verifier. Thus, a pirate could use a legitimate card for access authentication, i.e., to authenticate its right to access the content of the broadcast, and then use a pirated card to avoid being billed for the access, i.e. to avoid recording that the access was actually made by the legitimate card holder. This type of pirating is referred to herein as an example of a type of attack known as a conduit attack.

Another security approach is described in U.S. patent 5,461,675 to Diehl et al, which proposes to relate data between successive data packets, thus detecting when a packet has been removed. Particularly, Diehl proposes to inform a legitimate smart card when it is being avoided. However, a pirated card could simply ignore such information and provide pirated access to the information.

In yet another approach, proposed in U.S. patent 5,778,068 to Johnson et al, a determination is made whether a provider device and a user device, which contains a renewable storage device and a processing device, are authorized to operate with each other. The Johnson approach determines whether a user device, in this case, a device which generally corresponds to a set top box coupled with a provider specific storage device, is valid by authenticating the user device to a provider device, in this case, a device which generally corresponds to a backend module. However, this approach does not determine if the storage device is valid, i.e. if the storage device is authorized to operate with the user device or with a provider device. Accordingly, a pirate who successfully reverse engineered and modified the storage device could overcome the security protocols in Johnson, and more importantly, could mass produce the pirated storage device for distribution to and by users.

Another approach is proposed in U.S. patent to Peterson, Jr. Peterson authorizes access through a smart card which delivers key information to a processor which allows a playback device to reproduce information from a recording medium. The system proposed by Peterson uses a public key held at an authorization center and a private key held by the card. However, there is no pairing operation between the card and the processor, and there is no shared secret key between the card and the processor. Therefore, if a pirate successfully broke the encryption mechanism he/she could mass produce and widely distribute pirated cards, causing harm to the information provider.

Another approach is proposed in U.S. patent 5,448,045 to Clark, which uses a smart card to create a secure boot application on a computer by using the smart card to verify the executable files that the computer will run. The smart card and the computer share a secret which is installed by an administrator, and the smart card and the computer execute an authentication operation. However, once an attacher figures out the code, the pirated smart card would be able to authenticate itself. Furthermore, since there is no notion of challenge to the card by the computer, the authentication is replayable. Therefore, a card that is no longer valid may continue to be used.

Finally, another approach, proposed in U.S. patent 5,802,176 to Audebert, controls access to a particular function on a computer by using a renewable card. This is a transaction based system in which the card and the computer negotiate access and a key changes each time access occurs. However, the approach is limited to the particular function which is to be accessed on the computer, and is not useful for a system which deals with many different unpredictable functions/programs such in an information dissemination system, i.e. a system in which each different program (movie, song, article, executable, etc) would be a different function.

US Patent No. 4,935,962 discloses a method and system for smart-card authentication.

International Patent Publication No. 96/06504 discloses a smart-card based access control system with improved security.

US Patent No. 5,694,471 discloses a counterfeit-proof identification card.

US Patent No. 5,288 978 discloses a mutual authentication system and method which checks the authenticity of a device before transmitting authentication data to the device.

International Patent Publication No: 97/38530 discloses a method for providing secure communications between two devices.

International Patent Publication No: 97/30534 discloses reception apparatus for authenticated access to coded broadcast signals.

XP 539543 discloses a common conditional access interface for digital video broadcasting decoders.

XP 410493 discloses an enhanced line shuffle scrambling system with secure conditional access authorisation.

What is needed is a pirate card rejection (PCR) method and system for protecting valuable information; a method and system which is robust, which can be tailored to the needs of a particular information provider, and which overcomes the above noted deficiencies.


## Summary And Objects of the Invention

It is an object of the invention to prevent unauthorized access to information disseminated by an information provider.

It is a further object of the invention to prevent a pirate from enabling a large number of persons from obtaining unauthorized access to information from an information provider.

It is a further object of the invention to allow the information provider the flexibility of choosing any combination of a plurality of pirate card rejection techniques according to the individual needs of the information provider.

It is a further object of the invention to provide information only through an authorized receiving device and an authorized security device, such as a conditional access module ("CAM").

It is a further object of the invention to provide information only through an authorized non-renewable device and a renewable device.

It is a further object of the invention to cause a non-renewable device to reject a pirated renewable device, such that access to secured information is not obtained.

It is a still further object of the invention to provide a method and apparatus requiring a receiving device and a security device, such as a CAM, to communicate through a shared secret in order for a user to gain access to information.

It is an object to provide a method and apparatus which requires a security device, such as a conditional access module, to be paired with a receiving device and to provide information only through paired receiving and security devices.

In an aspect of the invention, it is an object to prevent an information receiving device from effectively communicating with a CAM with which it is not paired.

In another aspect of the invention, it is yet a further object to provide a method and apparatus wherein a security device can verify the authenticity of the media a receiving device is accessing.

In another aspect of the invention, it is an object to provide a method and apparatus for effectively preventing a pirate from interfering with the communications between the receiving device and the security device by requiring the communication to be carried out according to a specified protocol.

In yet another aspect of the invention, it is an object to provide a method and apparatus wherein a receiving device and a security device are required to negotiate a shared secret for communicating with each other.

To achieve the foregoing and other objects in accordance with the purpose of the present invention, as embodied and broadly described herein, an apparatus for preventing unauthorised access to information, comprising:

a non-renewable device configured to receive the information to be processed from an audio and/or video data source; and

a renewable device configured to be processed for authorizing the non-renewable device to process the information, said non-renewable device being paired with said renewable device by a shared secret, thereby enabling each of the non-renewable device and the renewable device to communicate with the other,

wherein the renewable device is configured to communicate with the non-renewable device according to a predetermined protocol using the shared secret,

wherein said non-renewable device includes a control logic generating a query message, and an authentication logic for authenticating information contained in said query message and information contained in a response message using said shared secret thereby generating a non-renewable device authentication message,

wherein the renewable device includes an authentication logic for authenticating the information contained in the query message and the information in the response message using said shared secret, thereby generating a renewable device authentication message, the renewable device further including a control logic operable to generate the response message and to provide said non-renewable device with said response message and the renewable device authentication message, said non-renewable device control logic being further operable to match the renewable device authentication message with the non-renewable device authentication message, and to provide the renewable device with a specified program if the renewable device authentication message matches the non-renewable device authentication message,

wherein the information is encrypted and the non-renewable device includes an output for outputting the information to the renewable device, and wherein the renewable device includes a decryption logic for decrypting the information, and an output for outputting the decrypted information to the non-renewable device, and

wherein each of said non-renewable device (100) and said renewable device includes an access window logic device generating an access window, wherein access to said information is limited to the shorter of the access windows generated by said access window logic devices.

In another aspect, the present invention may comprise a method of preventing unauthorised access to information from an audio and/or video data source, in a system comprising a non-renewable device having a control logic and a renewable device having a control logic operable to perform processing operations, wherein the information is encrypted and the non-renewable device includes an output for outputting the information to the renewable device, and wherein the renewable device includes a decryption logic for decrypting the information, and an output for outputting the decrypted information to the non-renewable device, the method comprising the steps of:

pairing the non-renewable device with the renewable device by performing said processing operations on said renewable device;

selectively authenticating messages exchanged between the non-renewable and renewable devices and sending an authenticated message based on said selected messages from said one of the non-renewable and renewable device to the other of said non-renewable and renewable devices;

verifying the authenticated message in the other of said non-renewable and renewable devices; and

authorizing access to said information,

wherein each of said non-renewable device and said renewable device includes an access window logic device for setting an amount of an access window remaining, and further comprising the steps of: generating an access window at the non-renewable device; generating an access window at the renewable device; and limiting access to the shorter one of the access windows generated at the non-renewable and renewable devices.

Additional objects, advantages and novel features of the invention will be set forth in part in the description which follows, and in part will become apparent to those skilled in the art upon examination of the following or may be learned by practice of the invention. The objects and advantages of the invention may be realized and attained by means of the instrumentalities and combinations particularly pointed out in the appended claims.

**Brief Description Of The Drawings**

The accompanying drawing, which are incorporated in and form a part of the specification, illustrate several embodiments of the present invention and, together with the description, serve to explain the principles of the invention.

Figure 1 is a block diagram of an embodiment of the present invention.

Figure 2 is a flow diagram depicting an embodiment of a unidirectional pairing operation between a Source and an authenticated conditional access module ("CAM") according to the invention.

Figure 3 is a flow diagram depicting another embodiment of a unidirectional pairing operation between a Source and a CAM.

Figure 4 is a flow diagram depicting an embodiment of a unidirectional pairing operation between a cam and an authenticated Sink.

Figure 5 is a flow diagram depicting an embodiment of a bi-directional pairing operation between a Source and a CAM with a direct shared secret value.

Figure 6 is a flow diagram depicting an embodiment of a bi-directional pairing operation between a Source and a CAM with a direct shared secret value.

Figure 7 is a diagram depicting an embodiment of a bi-directional pairing operation between a Source and a CAM with a direct shared secret value.

Figure 8 is a diagram depicting an embodiment of a bi-directional pairing operation between a CAM and a Sink with a direct shared secret value.

Figure 9 is a diagram depicting yet an embodiment of a bi-directional pairing operation between a CAM and a Sink with a direct shared secret value.

Figure 10 is a block diagram of a first embodiment of a title-based pirate card rejection ("PCR") architecture according to the present invention.

Figure 11 is a flow diagram illustrating the operation of a title-based PCR protocol according to the invention.

Figure 12 is a flow diagram illustrating another embodiment of a title-based PCR protocol with a window query operation.

Figure 13 is a block diagram depicting another embodiment of the invention having a metered, title-based PCR architecture.

Figure 14 is a flow diagram illustrating the operation of a metered, title-based PCR protocol according to the invention.

Figure 15 is a flow diagram illustrating the operation of a metered, title-based PCR protocol with credit request according to the invention.

Figure 16 is a block diagram depicting another embodiment of the invention having a metered, title-based pirate card rejection (PCR) architecture with nonvolatile memory (NVR) in the Source.

Figure 17 is a block diagram depicting a another embodiment of the invention having a combined Super-encryption/re-encryption and title-based.

Figure 18 is a flow diagram illustrating the operation of a Super-encryption and re-encryption PCR protocol.

Figure 19 is a block diagram depicting a another embodiment of the invention having a Combined Super-encryption/re-encryption PCR architecture.

Figure 20 is a flow diagram illustrating the operation of a Combined Super-encryption/re-encryption PCR protocol.

Figure 21 is a block diagram depicting another embodiment of the invention having an authenticating media Source architecture.

Figure 22 is a flow diagram illustrating an operation of an authenticating media Source protocol according to the invention.

Figure 23 is a flow diagram illustrating another operation of an authenticating media Source protocol according to the invention.

Figure 24 is a block diagram depicting another embodiment of the invention having a Combined Super-encryption/re-encryption title-based PCR and media authentication architecture.

Figure 25 is a flow diagram illustrating an operation of a Combined Super-encryption/re-encryption, title-based PCR and media authentication protocol according to the invention.

Figure 26 is a block diagram depicting another embodiment of the invention having a date-based ("BBRAM") PCR having a NVM on a set top box ("STB") and a battery backup RAM on a CAM architecture.

Figure 27 is a flow diagram illustrating an operation of a data based PCR protocol with NVM on a STB and a BBRAM on a CAM.

In the various figures, identical or similar elements, structures and operations are similarly numbered. Any differences between similarly numbered element, structures and operations in the various figures will be apparent to the artisan from the figures or from the following description.

**Detailed Description Of The Invention**

Reference will now be made in detail to the presently preferred embodiments of the invention, examples of which are illustrated in the accompanying drawings.

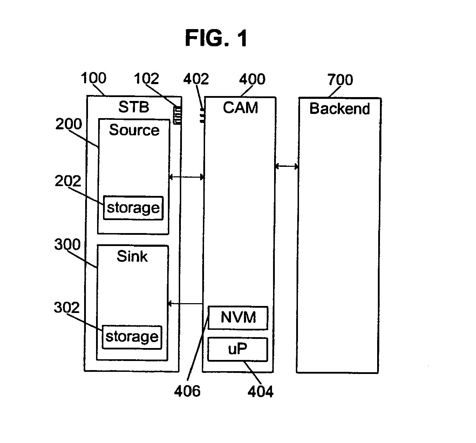

Figure 1 is a simplified block diagram of an embodiment of the depicting an exemplary Pirate Card Rejection ("PCR") system according to the present invention. As shown in Figure 1 a conditional access module ("CAM") **400** conditionally authorizes access to information from a backend system **700** through a set top box **100** which include a source **200** and a sink **300**. The source **200** may receive the information from almost any system or source such as, for example, a data stream, a broadcast stream, or a readable storage medium such as an optical readable and/or recordable disc, a magnetic disc or a tape. An example of an optical readable and/or recordable disc includes, but is not limited to, a CD or DVD disc which contains digital audio and video information such as movies and/or other data and executables. As used herein, the term "information" is intended to broadly refer to content data, such as audio and or video data, as well as other types of data and executables from any source. Similarly, a specific program or title within the information may include content data, such as who and/or video, data, as well as other types of data and executables from any service.

The source **200** may include conventional circuitry known to those of skill in the art for receiving a data stream, a broadcast stream, and/or conventional circuitry to retrieve information from an optical readable and/or recordable disc or a magnetic disc or tape by using any one of a variety of techniques well known to one of ordinary skill in the art, examples of which are illustrated in U.S. patent 5,481,609 to Cohen et al and U.S. patent 5,440,631 to Akiyama et al.

The sink **300** is operable to transform the data stream into a visually and/or audio perceptible form, so that it may be displayed using a variety of video and/or audio display devices as are known in the art or to execute an executable or otherwise process data. In the movie example, the sink **300** contains conventional circuitry, known to those skilled in the art, for converting information into video and audio information which may be displayed on a video and/or audio display system. For other applications, such as accessing executables, the sink **300** may, for example, be (or be incorporated into) a general purpose computing device. Although the source **200** and the sink **300** are shown as separate devices in Figure 1, they may alternatively be integrated into one device. Also, although the Source **200** and the Sink **300** are shown in Figure 1 as part of a set top box ("STB") **100**, one or both may be separate from the STB.

The CAM **400** preferably comprises a relatively inexpensive module having decryption and advantageously logging capabilities. The CAM **400** may decrypt the content of the information (movies, music, articles, executables, etc.), or the CAM **400** may decrypt a key which allows a device in the set top box **100**, which preferably includes the source **200** or the sink **300**, to decrypt the content of the information. Alternatively, the CAM **400** may authorize the source **200** and sink **300** to access the information. The CAM **400** may, for example, include a series of pins **402** which can be plugged into a receptacle 102 mounted on the set top box **100**. In the context of the present invention, the CAM 400 is considered to be an example of a renewable security device. Although Figure 1 shows CAM **400** to be outside of the set top box **100**, it may also be contained within the set top box **100** which would require the set top box **100** to be opened to remove the CAM **400.** The renewal of the CAM **400** is preferably done with the authorization of the information provider, and may be done on an individual need basis to replace a defective CAM or a pirated CAM, or may be done periodically to further guard against pirating of the CAM **400**. Accordingly, a PCR system according to the invention is advantageously designed to allow the customer to substitute CAMs for the legitimate purpose of responding to CAM failure and to allow for the issuance and insertion of replacement CAMs for reasons of security and/or enhanced or improved operation.

The CAM **400** may contain a microprocessor **404** or the like that enables it to perform decryption and logging (e.g., billing, access authorization access recordation and management of other transactional information), and in some embodiments, to perform re-encryption as well. The CAM **400** preferably uses some combination of local non-volatile memory 406 and (on-line or off-line) services for connecting to remote nodes in order to reliably accomplish logging. In some cases, the CAM 400 must retrieve such information from either local memory 406 or remote archives for use by the non-renewable playback device, i.e., the set top box 100. The frequency of such reads and/or writes may determine the efficacy of using local non-volatile memory vs. remote archives accessed through modems or other means. As alluded to above, the CAM 400 may make use of local storage elements 406 which are located onboard the CAM 400 or associated storage components. For example, located within the set top box 100, there are preferably storage elements 202 or 302 which may be part of the source 200 or the sink 300 respectively, or mounted on a separate board or module of its own.

The backend 700, which may include a conditional access system, bills the information user for accessing the information or may process the log in other ways. The backend 700 may or may not provide the information, such as a movie, directly to the set box 100. For example, the information user may obtain the movie from a local source, such as a DVD, which can only be accessed after the access is logged. Such a system is disclosed in commonly assigned US. Patent 5,822,291.

Assuming that at least some part of the source content is protected by encryption, the corresponding decryption procedure is achievable through use of secret(s) legitimately made available to CAM 400 which operate in compliance with the backend 700. Preferably, the CAM 400 is a renewable device which is controlled by the information provider or by a certification authority, either or both of which may be part of the backend **700**. For example, a certification authority may be an entity which is independent of the backend **700** and which certifies keys that are used on the CAM **400**. Alternatively, the certification authority may be the same entity as the backend **700** or be incorporated into the backend **700**. An example of the operation of a certification authority may be found in CCITT, Recommendation X.509 (1989).

The set top box **100** is preferably a non-renewable device that is owned or leased by the customer of the information provider.

Since a pirate can sell competing (pirated) components at a cost lower than the value of the information sold by the legitimate information provider, there is a need for technology that causes the non-renewable component (i.e., the set top box **100**) to reject the pirated renewable component (i.e., the CAM **400**). Particularly, pirate card rejection (PCR) is most effective when deployed in connection with a backend system **700** where the pirate must both compromise the CAM **400**, thereby learning the universal secrets of the CAM **400**, and compromise the information receiving device, e.g., the set top box **100**, perhaps by altering legitimate broadcast receivers or legitimate playback devices. If a pirate is not willing (or is not efficiently able) to compromise individual CAMs to learn individual secrets or modify functionality such as logging of play on individual CAMs, then the access system will remain secure. In other words, PCR is most effective if the easier of the two possible circumvention methods is prohibitive from an economic standpoint. Additionally, even if a pirate manages to build non-compliant set top box devices, security is conditioned on the assumption that he cannot do so on a large scale, not only because such devices are expensive to build, distribute, and support, but also because profit margins on even legitimate set top box devices are low. Accordingly, a rational, economically motivated pirate would prefer to build pirated CAMs than pirated playback devices. Thus the real threat of attack to the information provider is from pirated CAMs.

In the case of *explicit* PCR, the set top box **100** will reject communication from CAMs with which they are not authorized to communicate. Explicit PCR enables the devices to detect attempts to bypass the security provided by the CAM **400**, and to reject communications and authorizations from pirated CAMs.

In the case of *implicit* PCR, if there is an attempt to by pass the CAM **400** the devices will fail to attain an acceptable level of service in terms of uninterrupted and uncorrupted presentation of the source material, because of a breakdown or disruption in effective communications.

In order to be an effective pirate card rejection module, a PCR system should effectively rebuff various types of attack. Namely, an effective PCR system should preferably counter attacks based on the use of a legitimate set top box device and a pirated CAM, a legitimate set top box device with a pirated CAM hosting a legitimate CAM (the *conduit* attack), and a pirated set top box device and a legitimate CAM. The delineation of these scenarios is independent of whether the set top box device can authenticate itself. For example, if a pirated version of a set top box device that authenticates itself can use a legitimate CAM for free access to information, security may be compromised. Additionally, in the conduit attack, a legitimate CAM is used to enable the legitimate device to generate content bits, while the pirated CAM is used to decrypt those content bits. Another attack is eavesdropping on the stream the legitimate set top box produces, or the stream that the CAM returns to the set top box.

In accordance with an aspect of the invention, the efficacy of PCR and play-media source authentication is preferably enhanced through the utilization of robust device pairing protocols. Interface protection protocols may also play a role. Individualization, as explained below, may support the security attributes of such protocols. It will be understood by those of skill in the art that a PCR system according to the present invention may include any combination of pairing protocols, PCR protocols, interface protection protocols, and anti-piracy techniques. Accordingly, any number of combinations of multi-layer protocols can be used for customized security. For example, one such multi-layer protocol that may be used is an undirectional pairing of a source and an authenticate CAM operation with a title-based PCR protocol. Particularly, the selection of the combination will depend on the business goals of the information provider. This is a significant improvement over the prior art because many prior art devices rely on system architecture for security and do not provide flexibility in choosing an architecture consistent with a desired business plan.

The pairing protocols and the PCR protocols described below rebuff attacks involving a pirated set top box or a pirated CAM used separately, as well as the conduit attack and the eavesdropping attack. The detection of piracy, which may be characterized by local replay of information generated by the set top box **100**, is within the scope of the invention. Additionally, real time authentication of the set top box **100** the CAM **400** and the media on which the information is provided prevents the user from accessing information on currently authorized media.

Each CAM **400** is preferably individualized and paired with a particular set top box **100**. Individualization refers to the fact that each CAM (or relatively small subset of CAMs) contains a secret which is difficult to derive through knowledge of the secrets of other CAMs. As should be apparent, it is substantially easier for the conditional access provider to individualize a CAM than it is for the pirate to obtain those individualized secrets from the CAM. Each CAM **400** also preferably contains a universal key or series of keys which may be used for conditional access to information.

The universality aspect refers to the fact that efficient broad case distribution mechanisms may severely limit the number of versions of content which are broadcast at any one time or otherwise made available.

**PAIRING**

The requirement of pairing prevents the pirate who successfully reverse engineers a legitimate CAM from mass producing a derivative CAM which uses can be with the source devices of other users. Specifically, it is contemplated that a derivative CAM will not successfully be able to be paired with source devices other than those with which the original CAM is authorized to be paired. The backend system **700** may issue a pairing by which associates a source **200** with a downstream CAM **400**. Similarly, a pairing may be issued which associates a CAM **400** with a downstream sink **300**.

Pairings may be unidirectional in that only one of the two entities, for example the downstream entity, is an authenticated entity, (i.e., an entity that will consequently be able to authenticate communications to the other entity as having originated with it) as may be verifiable by the other (unauthenticated) entity. Such a pairing alternatively or additionally allows encrypted communications to be directed to the authenticated entity. A unidirectional pairing may be established by means of presenting an authenticated public key to an entity which enables, and thus effectively authorizes, that entity to successfully communicate with an entity in possession of the corresponding private key. The authenticated public key is presented in such a way that the association of the public key with the entity authorized to communicate by means of that public key is explicitly authenticated.

One means of establishing a bi-directional pairing is through establishment of two unidirectional pairings.

One goal of pairing is to allow the two entities to establish a shared secret value. This may be accomplished by using the authenticated public key and corresponding private key of the authenticated entity. If the establishment of the shared secret value is based on a single unidirectional pairing, the unauthenticated entity contributes a public key for which it possesses the corresponding private key. This key pair may be generated on the device or may be established during or related to the device manufacturing process.

In the case of bi-directional pairing both entities may present authenticated public keys.

In order to establish the shared secret value, the two entities may use a function f, such as that taught in US Patent No. 4,200,770, where f(PUBKEY entity 1, PRIVKEYentity 2) = f(PUBKEYentity 2, PRIVKEYentity 1). In that case, each of the entities, for example entity 1 and entity 2, derive the shared secret value by applying the function f to the other entity's public key and its own private key. A shared secret value may alternatively be established by using the authenticated public key in an encryption algorithm (see e.g., U.S. Patent No. 4,405,829 *or* A Public Key Crypitosystem And A Signature Scheme Based On Discrete Logarithms; T. El Gamal, Advances In Cryptology (1985)), where the shared secret value may be chosen directly by the entity that does the encryption. Alternatively, bi-directional pairings may result directly in the establishment of a shared secret value.

In order to preserve the desired effect of pairing, the backend **700** or some other trusted authority may determine or verify the extent to which nominally distinct authenticated entities are associated with common public keys.

An entity may play a role in policing itself in that either before or after being authorized to communicate with a particular entity, it limits the number of apparently distinct entities with which it will communicate.

**Pairing revocation/deauthorization:**

In accordance with an aspect of the invention, digitally-signed lists and/or specifically targeted deauthorization messages may be issued in order to effectively remove offending parties from the system. Specifically targeted messages may be encrypted and/or authenticated uniquely for a given source **200**, sink **300** or CAM **400** device. As a form of passive deauthorization, pairings may expire as discernible, for example, by checking a pairing expiration date against local date information available to the appropriately configured device. As further explained below, the pairing expiration may be indicated by certificates, if appropriate.

The system may support delayed bindings for which one or more aspects of the pairing are not immediately verifiable. The pairing may be used temporarily, where the pairing is later confirmed or rejected (i.e., revoked or deauthorized) by the appropriate authority.

Some of the embodiments of pairing protocols depicted in the following illustrations make use of digital certificates which link information associated with a single entity, as denoted by the Entity-Certify (information) operation, or which cross-certify by linking information associated with distinct entities, as denoted by the Cross-Certify (information) operation. The result of these operations are an Entity-Certificate and Cross-Certificate, respectively.

The certificates are generated using knowledge of private signature keys such that the associated public verification keys appear in a chain of acceptable keys as held by the verifying entity. The chaining of keys may itself be established by use of certificates. The certificates in the following protocols are to be understood as including signatures on text, as well as the text itself if necessary. In some cases, parts of the text may separately be known by or separately delivered to the verifying party. Certificates may also include an indication of which public signature verification key should be used to verify the certificate. Cross Certificates may be generated by the conditional access system backend **700**. Entity-Certificates may be generated by the conditional access system backend **700** or by an authority trusted by the backend to perform this function.

As used in the protocols illustrated in the figures described below, if an ID pertains to an unauthenticated entity, the ID may be generated randomly or pseudo-randomly during the pairing operation.

The public key of the entity to be authenticated, if needed by the conditional access system backend **700**, may be addressable by the backend **700** by using the entity ID or may be understood to be communicated to the backend **700** (preferably securely) as part of the pairing operation. The private key of the entity to be authenticated may in some instances be communicated (preferably securely) to the entity as part of the pairing operation. This latter technique allows the backend **700** to dynamically allocate shared public key values to designated groups of entities.

Either of the two entities in a pairing may reject the pairing on the basis of information received from the other entity or from the backend **700**.

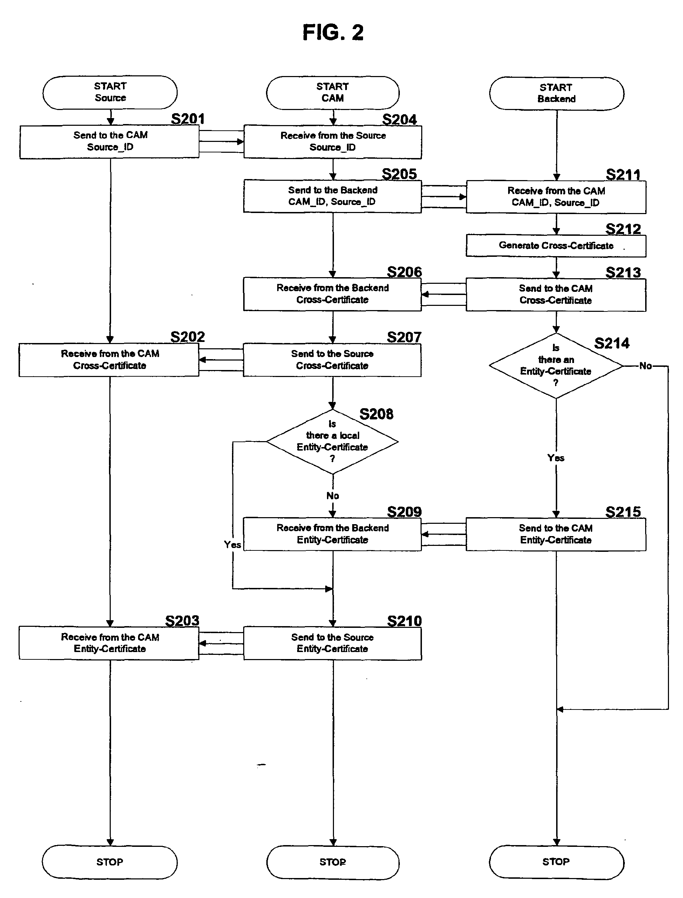

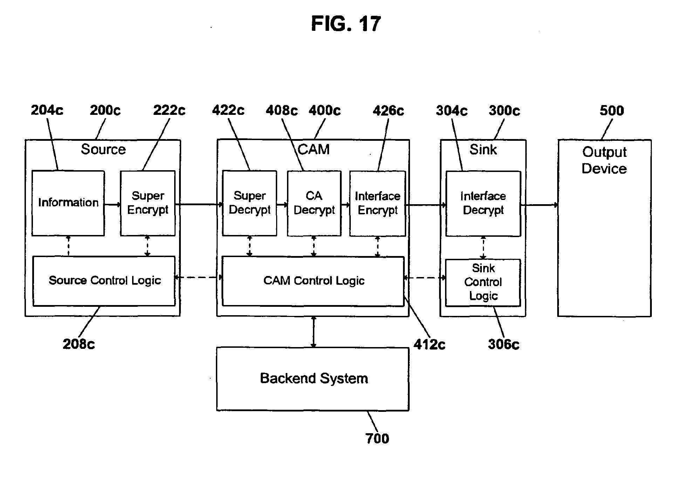

An exemplary architecture for performing the operation of the following pairing protocols is shown in Figure 17. Figures 2 through 9 illustrate the operation of the protocols by showing the parallel processing of the source **200**, the CAM **400** and the backend **700** and their respective interaction. As will be understood by one of skill in the art, the protocols illustrated are exemplary and the sequence of some steps or the communication paths may be altered without departing from the spirit or scope of the invention. In the figures, parallel lines surrounding a flow arrow, for example between the source **200**, the CAM **400**, and the backend **700** respectively, (see, e.g., Fig. 2, step **S205**, step **S213**, step **S207**, step **S215** and step **S210**) is intended to illustrate a synchronizing operation wherein the receiving device must receive the message shown by the flow arrow before it may proceed.

Notationally, when shown between arguments of subroutines, commas denote concatenation of data streams. The term "message" may itself be a concatenation of various sub-messages, and the symbol $\oplus$ denotes bit-wise exclusive-or of bitstreams of like length.

### Unidirectional Pairing of A Source and An Authenticated CAM

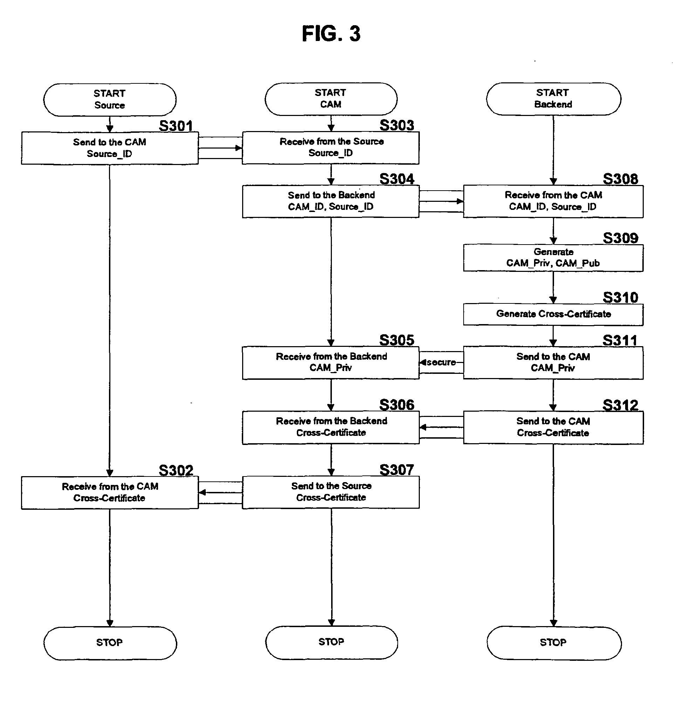

Reference will now be made to Figures 2 and 3 for a discussion of unidirectional pairing protocols for the source **200** and an authenticated CAM **400**. In the various protocol diagrams, similar steps within the various protocols are labeled with similar reference numerals for ease of understanding. However, it should be understood that the actual implementation of those steps may be the same or different in practice.

As shown in Figure 2, the source **200** sends a source ID to the CAM **400** (**S201**). After receiving the source ID (**S204**), the CAM **400** sends a CAM ID and the source ID to the backend **700** (**S205**). After receiving the source ID, the backend **700** generates a Cross-Certificate and sends it to the CAM **400** (**S211, S212, S213**), i.e. the backend **700** generates the value Cross-Certify(CAM_ID, Source_ID). The CAM **400** then sends the Cross-Certificate to source **200** (**S202**). The CAM **400** determines if there is a local Entity-Certificate on the CAM **400** (**S208**). Namely, the value Entity-Certify(CAM_ID, CAM_Pub) where CAM_Pub is the public key of the CAM. If the determination is YES, then the CAM **400** sends the local Entity-Certificate of the CAM **400** to the source **200,** and the CAM **400** is paired with the source **200** (**S210, S203**). If the determination is NO, then the CAM **400** receives a Local Entity-Certificate from the backend **700,** if the backend **700** has a Local Entity-Certificate for the CAM **400** (**S209, S215, S214**). The CAM **400** then sends the local Entity-Certificate received from the backend **700** to the source **200**, and the CAM **400** is paired with the source **200** (**S210, S203**).

Alternatively, the above certificates may take the value of Cross-Certify(Entity-Certify(CAM_ID, CAM_Pub), Source_ID) or the value Cross-Certify (CAM_Pub, Source ID).

In the process of verifying the certificate(s), the source **200** checks, in particular, that the Cross-Certificate was computed using its specific source ID.

In the present embodiment, it is assumed that the CAM **400** is in possession of the private key, CAM_Priv, independently of this protocol. The Entity-Certificate, if required, is sent (once) by the CAM **400** to the source **200** (**S210**), whether or not the backend **700** can access this certificate and consequently transmit it to the CAM **400.** When the CAM **400** checks for a local Entity-Certificate, it may check if its version of the Entity-Certificate is currently valid. If not, it can use the version of the Entity-Certificate it receives from the backend **100**, if any.

In the alternative embodiment, shown in Figure 3, the source **200** sends a source ID to the CAM **400** (**S301**). After receiving the source ID (**S303**), the CAM **400** sends a CAM ID and the source ID to the backend **700** (**S304, S308**). The backend **700** generates a CAM private key, CAM_Priv, and a CAM public key, CAM_Pub, and generates a Cross-Certificate, i.e. the backend generates a value Cross-Certify(CAM_Pub, Source_ID) (**S309, S310**). Next, the backend **700** sends the CAM private key, CAM_Priv, to the CAM **400** through a secure transmission (**S311, S305**). The backend **700** also sends the Cross-Certificate to the CAM **400,** which then sends the Cross-Certificate to source **200** (**S312, S306, S307, S302**). The CAM **400** is now paired with the source **200**.

In the embodiment of Figure 3, it may be assumed that the CAM private key, CAM_Priv, is not held at the CAM **400** independently of this protocol. It may further be assumed that a secure channel exists to confidentially transmit the CAM private key, CAM_Priv, from the backend 700 to the CAM 400.

Unidirectional Pairing of A CAM and An Authenticated Sink

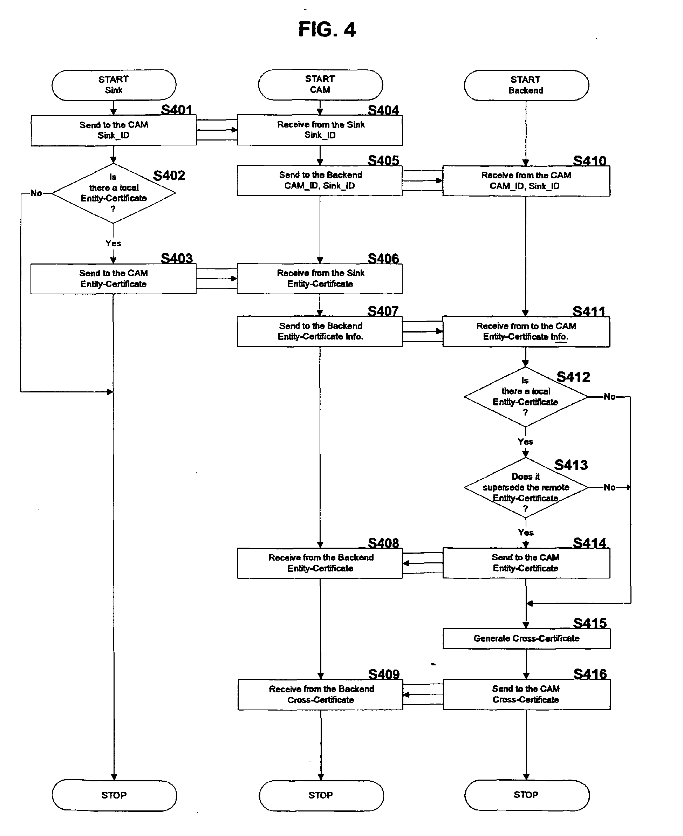

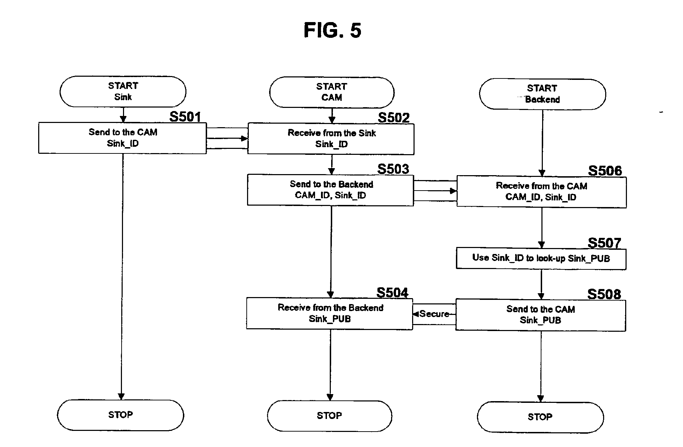

Reference will now be made to Figures 4 and 5 for a discussion of unidirectional pairing protocols for the CAM 400 and an authenticated sink 300.

As shown in Figure 4, the sink 300 sends a sink ID to the CAM 400 (S401). After receiving the sink ID (S404), the CAM 400 sends a CAM ID and the sink ID to the backend 700 (S405, 410). The sink 300 determines if there is a local Entity-Certificate (**S402**). If the determination is YES, the sink **300** sends the local Entity-Certificate of the sink **300** to the CAM **400** (**S403, S406**), i.e., the value Entity-Certify(Sink_ID, Sink_Pub) where Sink_Pub is the public key of the Sink. If the determination is NO, the protocol ends. The CAM **400,** then sends the local Entity-Certificate of the sink **300** to the backend **700** (**S407, S411**). The backend **700** determines whether it holds a local Entity-Certificate for the sink **300**, and if it does, then whether the local Entity-Certificate held by the backend **700** supersedes the local Entity-Certificate held by the sink **300** (**S412, S413**). If the determination in both steps **S412** and **S413** is YES, then the backend **700** sends the CAM **400** the local Entity-Certificate for the sink **300** held by the backend **700** (**S414, S408**). Next, the backend **700** generates a Cross-Certificate (**S415**), i.e. the backend generates the value Cross-Certify(Sink_ID, CAM_ID). Then the backend **700** sends the Cross-Certificate to the CAM **400** (**S416, S409**), causing the CAM **400** to be paired with the sink **300**.

If the CAM **400** receives Entity-Certificate from sink **300** in step **S406**, Entity-Certificate information may include version number, or expiration date, or issue date, etc. Furthermore, in step **S414,** either entity certificates or the sink public key, Sink_Pub, is sent, but not both. In the event Sink_Pub is sent, it should preferably be transmitted securely to the CAM **400** so as to avoid undetected substitution. Additionally, if there is an Entity-Certificate (corresponding to the specific Sink_ID) held at the backend **700,** and it supersedes the version received by the CAM **400** from the sink **300** (as based on the Entity-Certificate Information), this Entity-Certificate, namely the value Entity-Certify(Sink_ID, Sink_Pub), in included in the transmission in step **S414**. If no Entity-Certificate Information is received by the backend **700**, the local Entity-Certificate (if any) would be sent to the CAM **400**.

Alternatively, the above certificates may be of the value Cross-Certify(Entity-Certify(Sink_ID, Sink_Pub), CAM_ID), or of the Cross-Certify(Sink_Pub, CAM_ID).

In the process of verifying the certificate(s), the CAM **400** checks, in particular, that the Cross-Certificate was computed using its specific CAM_ID. The CAM **400** uses the most current of the Entity-Certificate (if any) as received from the sink **300** and/or the backend **700**.

In the alternative embodiment shown in Figure 5, the sink **300** sends a sink ID to the CAM **400** (**S51**). After receiving the sink ID (**S502**), the CAM **400** sends a CAM ID and the sink ID to the backend **700** (**S503, S506**). The backend **700** uses the sink ID to look up a public key Sink_Pub for the sink **300** (**S507**). Then backend 700 sends Sink_Pub to the CAM **400,** and CAM **400** becomes paired with sink **300** (**S508, S504**).

**Bi-directional Pairing of Source and CAM with Direct Shared Secret Value**

In this and the following bi-directional protocol, the shared secret value is sent to the CAM **400** from the backend **700**, as an explicit part of the pairing operation. This should be preferably done via a secure means of communication between the backend **700** and the CAM **400**. If not already possessed by the other entity independently of the pairing protocol, this secret should preferably be communicated to the other entity from the backend **700** through the CAM **400** in such a way as to preserve its confidentiality over the channel between the CAM **400** and the other entity. This may be done, for example, by an encryption procedure where the corresponding decryption procedure is known to the other entity. We denote the secured version of the secret by the value $(Source\_Secret)_{SOURCE}$ and the value $(Sink\text{-}Secret)_{SINK}$, respectively. The source **200**, or sink **300**, may not know its secret independently of the pairing protocol, because it may be determined dynamically by the backend **700**. This technique may be invoked if, for example, it is deemed advantageous that two or more CAMs which are authorized to communicate with a single source (or sink) are forced to maintain distinct cryptographic identities.

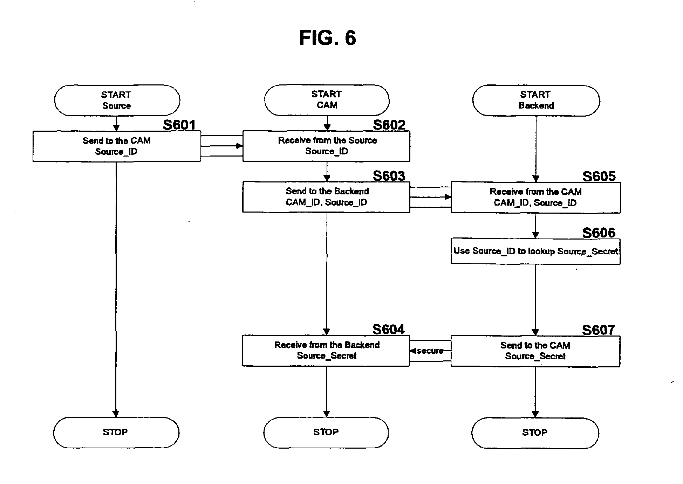

As shown in Figure 6, the source **200** sends a source ID to the CAM **400,** which sends the source ID and a CAM ID to the backend **700** (**S601, S602, S603, S605**). The backend **700** uses the source ID to look up a source secret, Source_Secret, (**S606**) which is sent via a secure transmission to the CAM **400** (**S607, S604**). Although not illustrated in Fig. 6, if the Source_Secret is not known to the source **200** then the backend **700** sends the value $(Source\text{-}Secret)_{SOURCE}$ to the CAM **400**. In either event, CAM **400** becomes paired with the source **200.**

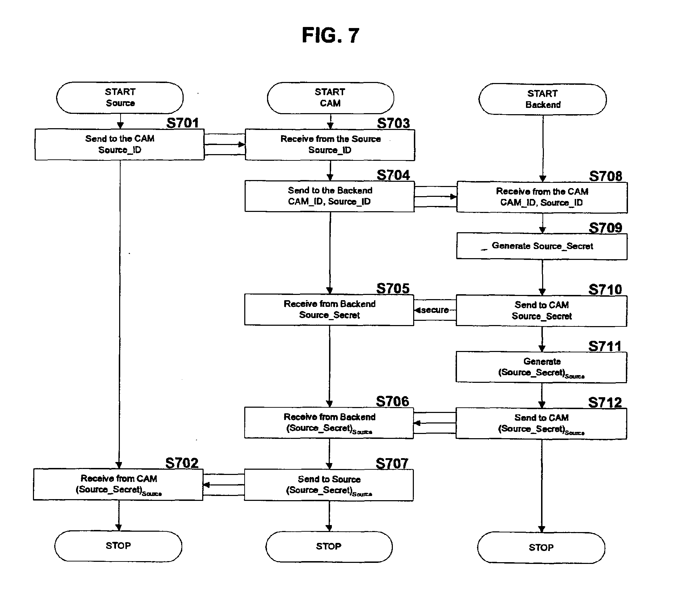

In an alternative embodiment, depicted in Fig. 7, the source **200** sends a source ID to the CAM **400,** which sends the source ID and a CAM ID to the backend **700** (**S701, S703, S704, S708**). The backend **700** generates a source secret, Source_Secret, (**S709**), and sends the value Source_Secret to the CAM **400** through a secured transmission (**S710, S705**). Then the backend **700** generates the value $(Source\_Secret)_{SOURCE}$ (**S711**). In this embodiment it is assumed that the source secret is not known to the source beforehand. Next, the backend **700** sends $(Source\text{-}Secret)_{SOURCE}$ to the CAM **400,** which sends it to the source **200** (S712, **S706, S707, S702**). Thus, the CAM **400 becomes** paired with the source **200.**

### Bi-directional Pairing of CAM and Sink with Direct Shared Secret Value

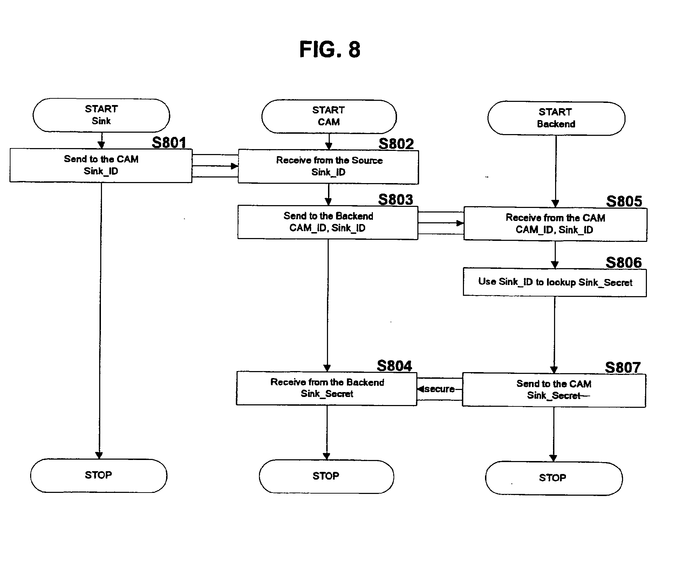

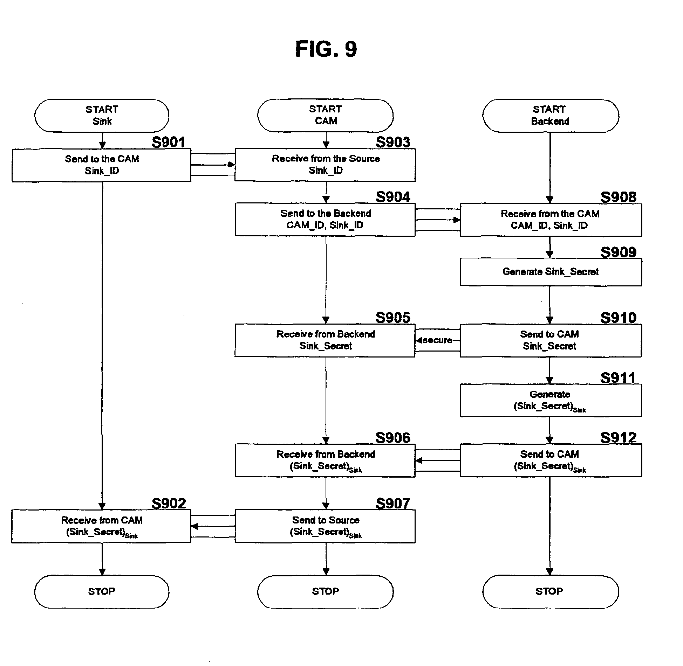

Reference will now be made to Figures 8 and 9 for a discussion of bi-directional pairing of the CAM **400** and the sink **300** with direct shared secret value.

As shown in Figure 8, the source **300** sends a sink ID to the CAM **400,** which sends the sink ID and a CAM ID to the backend **700** (**S801, S802, S803, S805**). The backend **700** uses the sink ID to look up a sink secret, Sink_Secret, (**S806**) which is sent via a secure transmission to the CAM **400** (**S807, S804**). Although not illustrated in Fig. 8, if the Sink_Secret is not known to the sink **200** then the backend **700** sends the value (Sink_Secret)$_{sink}$ to the CAM **400**. In either event, CAM **400** becomes paired with the sink **300.**

In an alternative embodiment depicted in Figure 9, the sink **300** sends a sink ID to the CAM **400**, which sends the sink ID and a CAM ID to the backend **700** (**S901, S903, S904, S908**). The backend **700** generates a sink secret, Sink_Secret, (S9**09**), and sends Sink_Secret to the CAM **400** through a secured transmission (**S910, S905**). Then the backend **700** generates the value (Sink_Secret)$_{Sink}$ (**S911**). In this embodiment it is assumed that the source secret is not known to the source beforehand. Next, the backend **700** sends the value (Sink_Secret)$_{Sink}$ to the CAM **400**, which sends it to the sink **300** (**S912, S906, S907, S902**). Thus, the CAM **400** becomes paired with the sink **300.**

### One-Way Hash Function (Hash)

A one-way hash function is a function which takes an input of potentially arbitrary length (length in, for example, bits) and maps the input into an output of some fixed prescribed length, where the outputs are denoted as hash words or hash values. The "one-way" aspect of the function refers to its intended security properties with respect to the computational difficulty of inversion. The function SHA-1, as defined in FIPS 180-1, is a commonly known example of a hash function. See also On the Security of Compressed Encodings; Selim G. Akl; Advances In Cryptology (Proceedings of Crypto 83) (1983) for background information.

### Key Derivation Function (KDF)

A shared secret value, however established between two entities, may be expanded by iteratively applying a key derivation function. The key derivation function may prescribe the length of the shared secret value. If the process, such as Diffie-Hellman, which is used to generate the original, i.e., first, shared secret value, results in values of length different than that prescribed by the key derivation function, both entities can independently derive from the first value a second shared secret value of the prescribed length. The authentication of the shared secret value may be addressed by means of pairing.

The inputs to the KDF include, in particular, the shared secret value. The other input, denoted as the KDF variable, is either a counter which is incremented between applications of the KDF or a random or pseudorandom value which preferably is unlikely to be reused during subsequent applications of the KDF. The output is a hash word which may be considered to be a Key, or a multiplicity of Keys of potentially different length. The Keys may subsequently be used in a bulk encryption algorithm such as the Data Encryption Standard. The Keys may also be used as inputs to subroutines such as Authenticate and Encrypt defined below. The input shared secret value to the KDF may in some instances be held constant. Alternatively, the input shared secret value may itself be refreshed by, for example, periodically replacing it with new values which may be generated by one of the two entities, preferably using a random or pseudorandom number generation process. The new input shared secret value may be transmitted from the originating entity to the other entity by using the Authenticate and Encrypt subroutines defined below, where the Keys used as an input to the Authenticate and Encrypt subroutines are generated using KDF with the current input shared secret value. In the following subroutine definitions, the shared secret value may be suppressed and therefore does not explicitly appear in the subroutine argument list.

$$KDF(KDF\ variable) = Hash(KDF\ variable,\ shared\ secret\ value,\ KDF\ variable)$$

### Command Authentication Function (Authenticate)

Authenticate may be used to authenticate commands of arbitrary length. It is similar in function to HMAC, see Keying Hash Functions For Message Authentication; M. Bellare et al, Advances In Cryptology (Crypto '96) (1996) which uses nested Hash operations.

$$\text{Authenticate(KDF variable, message)} = \text{Hash96(message, Key)} \oplus \text{Key}',$$

where Hash96 denotes the 96 most significant bits of the hash word Hash(message, Key), and Key and Key' result from the execution of KDF with input KDF variable. For example, if the function SHA-1 is used as the Hash in KDF, the derived Key may be the first 64 bits and Key' may be 96 bits in length. More specifically, Key equals the 64 least significant bits of KDF(KDF variable), and Key equals the 96 most significant bits of KDF(KDF variable).

Since the message cannot be computed from the result of the Authenticate function, the message may be sent separately either as plain text or encrypted, using, for example, Encrypt, as defined below.

**Encrypt, Decrypt, and Confirm**

In this example the KDF variable is suppressed. The KDF variable value(s) needed to generate the Key values are assumed to be known or negotiated between the two entities. The following definitions apply:

$$\text{Encrypt(plaintext message)} = \text{plaintext message} \oplus \text{Key} = \text{ciphertext message}$$

$$\text{Decrypt(ciphertext message)} = \text{ciphertext message} \oplus \text{Key} = \text{plaintext message}$$

Confirm(received ciphertext message) is true if and only if Encrypt(local plaintext message) matches the received ciphertext message. Confirm may be used by the receiver entity as assurance that the transmitter entity is in possession of knowledge of the plaintext value. The security of this function may be undermined if an adversary can somehow surmise the plaintext value. Confirm may actually be applied where Hash(plaintext) is used instead of plaintext message itself.

Authentication where the message being confirmed cannot be altered without being detected by the recipient.

**Pirate Card Rejection (PCR) Protocols**

These protocols use the result of the pairing operation, from which the source **300** and the CAM **400** will share a secret. This secret authenticates (either explicitly or implicitly) the CAM **400** to the source **300**. In the case where the CAM **400** and sink **300** are paired, they share another secret which authenticates the sink **300** to the CAM **400**.

The operating environment of the protocols preferably includes the following states:

1) Set-up information access: the prerequisite to establishing "play";
2) Information access: the state that "play" invokes;
3) End information access: the positive action that terminates "play." Information may not be subsequently accessed without setting-up information access again;
4) Clean-up information access: associated with "end information access," the handling of actions (if any) which follow the suspension or termination of play. If this occurs, it precedes resumed "set-up information access."

**Title-Based PCR**

In the Title-Based PCR embodiment, the customer access by a customer to a timed window of information is logged, and the customer is then allowed access to the information during that window. The protocol is appropriate for time windows that are much longer than the information (e.g., a two day movie rental).

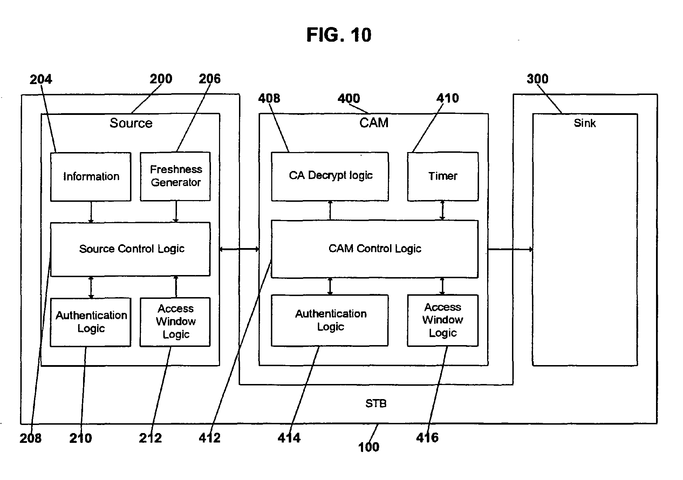

In this embodiment, as shown in Figure 10, the source **200** preferably contains a information receiving/generating device **204**, a freshness generator **206**, source control logic **208**, authentication logic **210**, and access window logic **212**. The freshness generator produces an arbitrary value. The freshness generator may, for example, be a counter which produces a count value or a random number generator which produces a random number, wherein said counter may count either up or down and/or by any incremental value. Additionally, CAM **400** preferably contains CA (conditional access) decryption logic **408**, a timer **410**, CAM control logic **412**, authentification logic **414** and an access window **416**.

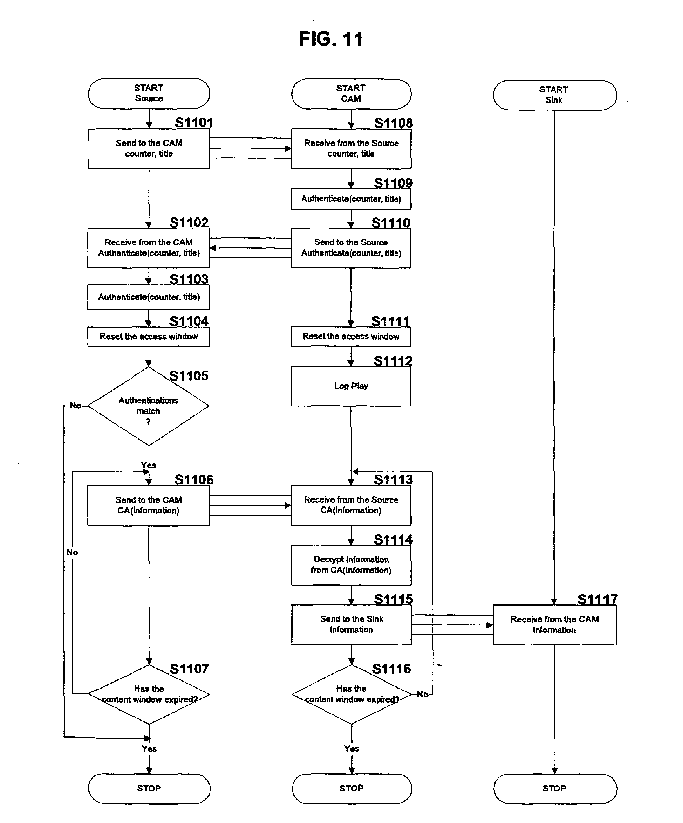

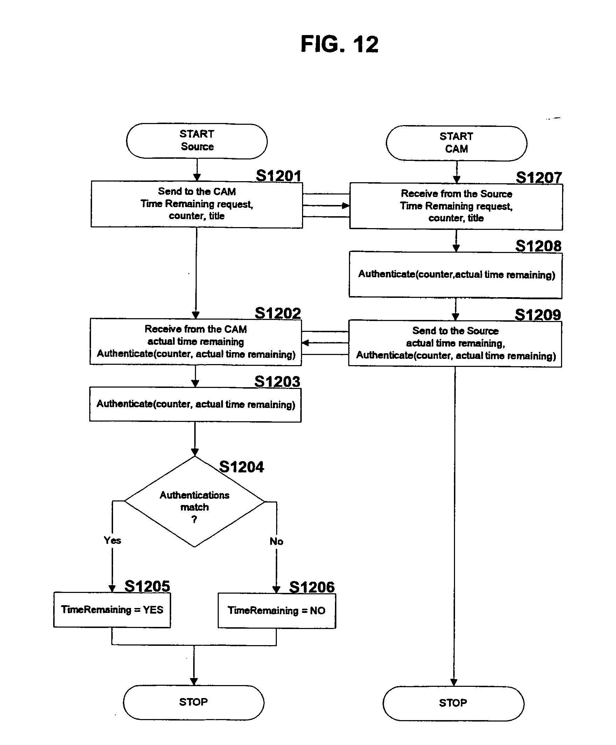

The access window logic **212** and **416**, in the source **200** and CAM **400** respectively, set a limit on the length of time a user is allowed access to a specified program. The operation of the embodiment of Figure 10 is illustrated in the flow diagram of Figures 11 and 12. It should be understood by those of skill in the art that the protocol shown Figures 11 and 12 are performed by the source control logic **208** and the CAM control logic **412** respectively.

As shown Figure 11, the source **200** provides the CAM **400** with a message including a counter value from the freshness generator **206** and the title of the program to be accessed from the information receiving/generating device **204** (**S1101**). The counter value used is different from counter values of previous messages. For example, the counter may be a random number from a random number generator, chosen anew at each iteration of the protocol, or it may be a counter stored in non-volatile memory (NVM) incremented each time it is used. The CAM **400** authenticates the message (**S1109**). Using the shared secret determined in the pairing operation described above. Next, the CAM **400** sends the authenticated message back to source **200** (**S1102, S1110**) after which the source **200** also authenticates the message (**S1103**) using the shared secret determined in the pairing operation described above. Both source **200** and CAM **400** reset the access window according to the access window logic **212** and **416** in the source **200** and the CAM **400** respectively. CAM **400** then logs the user access (**S1112**), which may be used at a later time by the backend **700** (not shown in Figure 10) to determine how much a user should be charged. The authentification logic **210** in source **200** (Fig. 10) verifies the authenticated messages generated at step **S1103** by the source **200** and generated at step **S1109** by the CAM **400,** respectively (**S1105**). Such authenticated messages should match since they are each produced using the same shared session key. If the authenticated messages do not match, then the source **200** stops the protocol. If the authenticated messages do match (verify), then the source **200** sends the content of the desired program to be accessed from the information receiving/generating device **204** in the source **200** to the CAM **400** (**S1106, S1113**). The CA decrypt logic **408** in CAM **400** is used by the CAM control logic **412** to decrypt the received information (**S1114**), and CAM **400** sends the decrypted information to the sink **300** where it is displayed in useable form to the user (**S1115, S1117**). Each of the source **200** and the CAM **400** determines if the access window has expired using its respective access window logic **212 and 416** (**S1107, S1116**). Each of the CAM **400** and the source **200** will independently stop processing information when it independently determines that the access window in its respective memory has expired.

Since the above protocol may cause the user to be charged for the entire time window, the source **200** may preferably query the CAM **400** whether a previously purchased window is still active. Such a query may precede the steps of Figure 11 with the steps of Figure 12. As shown in Figure 12 the source **200** inquires of the CAM **400** as to the amount of time remaining on the program along with the message containing the counter value and the title (**S1201, S1207**). The CAM **400** uses a timer **410** (Fig. 10) to determine the amount of time remaining. The CAM **400** authenticates the counter value and the actual time remaining (**S1208**) using the authentification logic **414** (Fig. 10) and sends the actual time remaining back to the source **200** along with the authenticated counter value and actual time remaining (**S1209, S1202**). The source **200**, authenticates the counter value and the time remaining using authentification logic **206** (**S1203**) and then determines if its authentification matches the authentification done by the CAM **400,** i.e. verifies the authentification (**S1204**). If they match, then the source sets the Time Remaining to YES (**S1205**). If the authentifications do not match, then the source sets the Time Remaining to NO (**S1206**). Thus the user will not be charged twice when the play, of for example a DVD disk, has been interrupted.

The authentication of the title preferably confirms to the source **200** that the CAM **400** is logging access to the information the source **200** is generating. This authorizes the source **200** to produce bits.

If the source **200** has a continuous play mode, it preferably tracks elapsed time, and terminates play when the window is empty.

This protocol is appropriate when there is a single billing window within which the information must be played, and especially when that window is significantly larger than the actual play of the information.

This embodiment may use 2-party (combined source and sink device), 3-party (separate source and sink devices), and/or PC architectures. Additionally, this embodiment does not require a non-volatile memory **202** in the source **200**, but it preferred that the source **200** be aware of title information, and restrictions on continuous play.

If the amount of information stream (i.e., footage) is used as a metric, instead of elapsed time since the window began, metered title-based PCR is a more appropriate protocol.

**Metered Title-Based PCR**

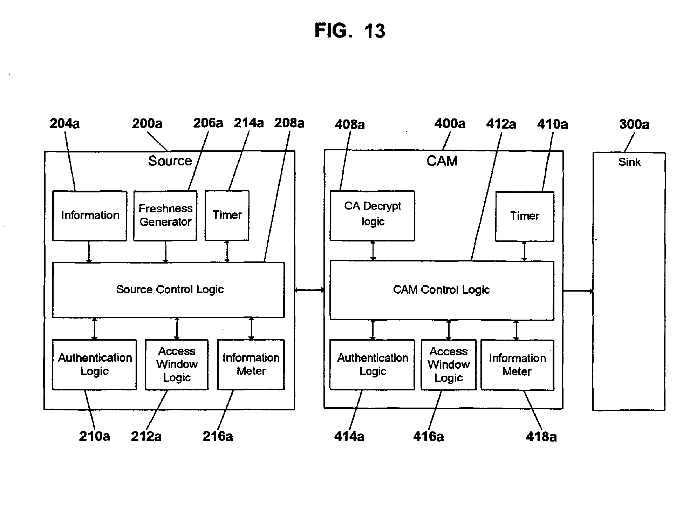

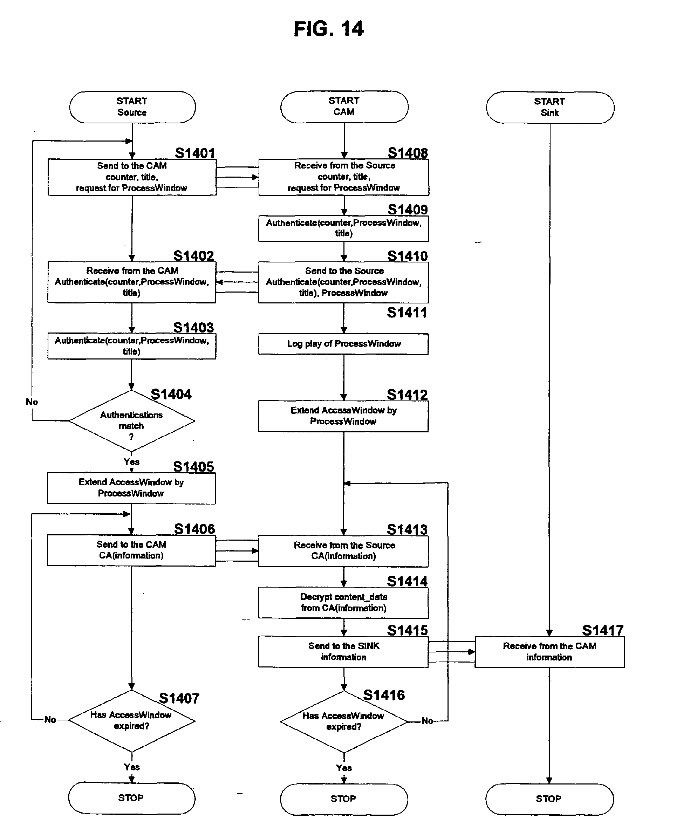

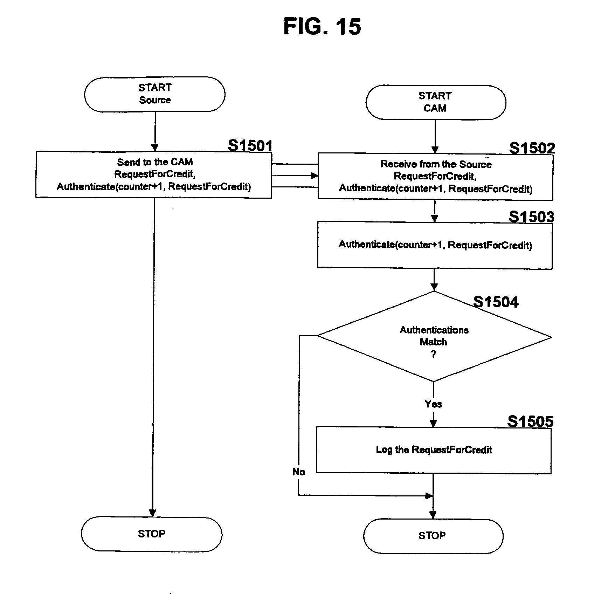

Another PCR protocol is Metered Title-Based PCR, in which the customer is charged incrementally for access to the information. An example of this embodiment and examples of the protocols used with it are shown in Figures 13 through 15. Figure 13 illustrates a preferred apparatus for performing the operations illustrated in Figures 14 and 15. Logging and charges may be based on elapsed time or footage (i.e., bytes) of information accessed.

In this embodiment, as shown in Figure 13, the source **200a** preferably contains a information receiving/generating device **204a,** a freshness generator **206a,** source control logic **208a,** authentication logic **210a,** and access window logic **212a,** a timer **214a,** and a information meter **216a.** The freshness generator **206a** produces an arbitrary value. The freshness generator **206a** may be a counter which produces a count value or a random number generator which produces a random number. Additionally, CAM **400a** preferably contains decryption logic **408a,** a timer **410a,** CAM control logic **412a**, authentication logic **414a**, access window logic **416a**, and a information meter **418a**. The access window logic **212a** and **416a** in the source **200a** and CAM **400a**; respectively set a limit on the length of time a user is allowed access to a specified program. Additionally, the information meter **216a** and the information meter **418a** preferably measure the amount of information by detecting the number of data packets containing information during the accessing process. It should be understood by those of skill in the art that the information is transmitted by use data packets, each being able to contain a predetermined amount of data. The timer **410a** and information meter **418a** keep track of the amount of information used and/or the amount of a window remaining. Additionally, it should be understood by those of skill in the art that the exemplary protocols is Figures 14 and 15 are performed by the source control logic **208a** and the CAM control logic **412a** respectively.

In the protocol embodiment depicted in Figure 14, the source **200a** provides the CAM **400a** with a message including a freshness value generated by the freshness generator **206a**, the title of the program to be accessed, and a request for a play window (**S1401**, **S1408**). A new play window may extend a previously purchased but not fully used play window. The CAM **400a** authenticates the message using authentication logic **414a**, and returns the authenticated message to the source **200a** (**S1409**, **S1410**, **S1402**). The source **200a** also authenticates the message using authentication logic **210** (**S1403**), and verifies the CAM authentication by determining if it matches the source authentication (**S1404**) using the source control logic **208a**. The verification of the authentication by the CAM **400a** indicates that the CAM **400a** has charged for or has logged access to the request for the newly requested window in step **S1412.** Upon verifying the message, the source **200a** extends the access window by a predetermined amount labeled "PlayWindow" (**S1405**). Next, the source **200a** sends information regarding the desired program to be accessed from the information receiving/generating device **204a** to the CAM **400a** (**S1406**, **S1413**). The CAM **400a** decrypts the information using the decryption logic **408a** (**S1414**), and provides the decrypted information to the sink device where it is displayed in a useable for to the user (**S1415**, **S1417**). Each of the source **200a** and the CAM **400a** determine if the access window has expired using its respective access window logics **212a** and **416a** and its respective information meters **216a** and **418a** (**S1407**, **S1416**). Preferably, the access window logic **212a** and the access window logic **416a** each set the length of the access window, which may be represented by a period of time or by a predetermined number of data packets. When represented by a period of time, the timer **410a** monitors the remaining access window. When represented by a predetermined number of data packets, the information meter **216a** and the information meter **418a** each detect the number of data packets carrying the information of the desired program as it is being accessed. Once the predetermined number of data packets has been detected, both the source **200a** and the CAM **400a** stop processing. Thus the user is allowed access to the information until either the CAM **400a** or the source **200a** determines that the access window has expired.

Additionally, at the end of information play, the source **200a** or the CAM **400a** may have an unused portion of the window, i.e. unused credit, so that, as shown in Figure 15, it may request credit. The source **200a** provides the CAM **400a** with a message containing a request for credit, and authentication of the message including the counter value incremented by 1, and the request for credit, (i.e., request for credit, Authenticate (counter + 1, request for credit) (**S1501**, **S1502**). The CAM **400a** authenticates the request for credit and counter + 1 (**S1503**) using authentication logic **414a**. Then the CAM **400a** verifies the authentication by determining if the authentication performed by authentication logic **414a** matches with the authentication performed by authentication logic **210a** (**S1504**). If the authentication's match, i.e. verify, then CAM **400a** logs the request for credit (**S1505**). If the authentications do not match, the protocol stops.

Additionally, the CAM **400a** may check that the freshness value in this request is linked to the most recent counter value used to request a play window. If a random value is used in lieu of a counter value (which require a non-volatile memory **202**), the value here can then be the most recent random value incremented by one. The CAM **400a** will stop processing information at that point, and the source **200a** will stop generating information. The credit granted is preferably the smaller of that which the CAM **400a** would have granted based on its own information, and what the source **200a** asks for. If the CAM **400a** uses only the information that it tracks to determine the credit due to the user, then a legitimate source **200a** can be used to play unlimited information with a pirated CAM **400a**. Likewise, if the CAM **400** uses only the information given to it by the source **200** to determine the credit due to the user, then a pirated source **200** can be used to play unlimited information with a legitimate CAM **400**. Notice that the ability of the source **200** to authenticate the request for credit need not confirm that the source **200** is requesting the credit, just that the same device that the CAM **400** authenticated is making the request.

Alternatively, instead of billing incrementally, this protocol may use deductions from a single charge covering a large window, to debit against previously paid window. For example, the user may request forty-eight hours of actual information access. In that case, the source **200a** may use the CAM **400a** as a meter of remaining "footage" within the window, where the source **200a** reports its incremental footage use. The prepaid window may preferably be broken up into "checkpoints" corresponding to requests for other play windows, and the source **200a** preferably reports ahead up to the next checkpoint. The source **200a** reports to the CAM **400a** each time a checkpoint is reached, and also each time information access is set-up again. If the debit window is simply a time interval during which information may be accessed, title-based PCR (discussed above) is adequate and simpler, since no intermediate reporting is necessary.

In this embodiment, whether using a credit approach or a debit approach, both the CAM **400a** and the source **200a** track information access, and stop play when the window is used up. If the CAM **400a** does not track the amount of information accessed, then a pirated source device might be used to play information virtually for free with a legitimate CAM. Likewise, if the source **200a** does not track the amount of information used, then a pirated CAM can decrypt unlimited information from the source **200a** after the source **200a** is given an authorized window by a legitimate CAM.

### Metered Title-Based PCR with NVM (Non-Volatile Memory) on Source Device

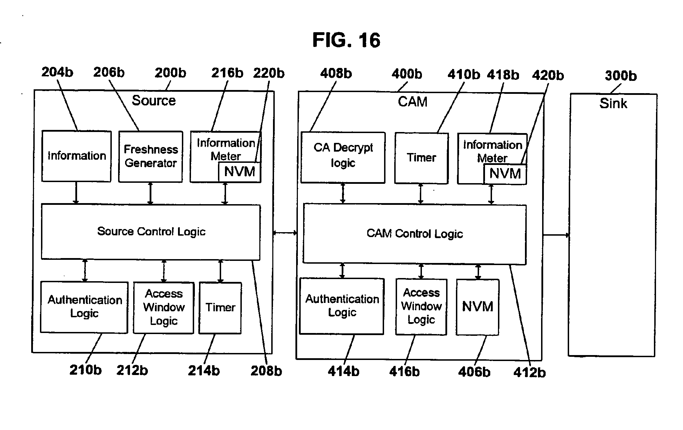

The embodiment illustrated in Figure 16 uses substantially the same protocol as described above but in addition credit may be requested after power loss. Depending on the duty cycle of the NVMs **220b, 420b** in the information meter **218b** and the information meter **418b** respectfully (which may comprise a battery backed RAM ("BBRAM") and the NMV **402** and on how often the information meters **218b** and **418b** are updated, the user should be charged almost exactly what (s)he is supposed to be charged. The NVM **220b** in the information meter **216b** is in the source **200b** and the NVM in the information meter **418b** in the CAM **400b**, preferably have storage capacities which are larger than the actual amount of information in the program, executable, etc., to be accessed.

### Super-encryption and Re-encryption

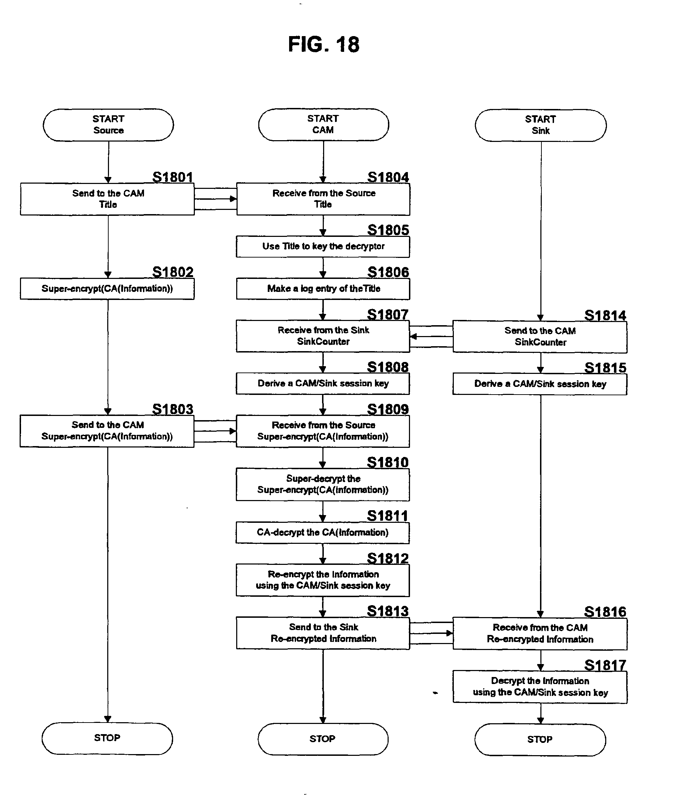

In the embodiment, embodiment of Figure 17 and the corresponding protocol depicted in Figure 18, effective re-use of the information stream sent to and from the

CAM **400c** is prevented. For example, an attacker may attempt to intercept the information stream between the source **200c** and the CAM **400c**, or between the CAM **400c** and the sink **300c**. Although the stream of data between the source **200c** and the CAM **400c** could be decrypted by a generic pirated CAM. This protocol resists these attacks, and, in addition, allows for arbitrarily fine billing granularity.

In Figure 17, the source **200c** preferably contains a information receiving/generating device **204c**, super encryption logic **222c**, and source logic **208c**. The super encryption device **222c** additionally encrypts using e.g., DES (Data Encryption Standard) FIPS Pub. 46-2 (1988) the information data, which is already encrypted, thus creating super-encrypted information data. Additionally, the CAM **400c** preferably contains super decryption logic **422c**, conditional access decryption logic **408c**, which may be the same as decryption logic **422c**, an interface encryption logic **426c**, and a CAM control logic **412c**. The sink **300c** includes interface decryption logic **304c** which decrypts the re-encrypted information data from the CAM **400c** using a negotiated session key. The sink **300c** also includes sink control logic **306c**. The backend **700** interacts with the CAM **400c**. An exemplary output device **500** is connected to the interface decryption logic **304c** although those of skill in the art will appreciate that the output device **500** may be integral with sink **300c.**

In an exemplary protocol for this embodiment, illustrated in Figure 18, the source **200c** provides the CAM **400c** with the title of the program which is to be accessed (**S1801, S1804**). The CAM **400c** preferably uses the title to locate the key required for the information access process (e.g., decryption) (**S1805**), and to make a log entry (or charge) (**S1806**). The source **200c** super-encrypts the protected information (**S1802**) using the super encrypt logic **222c,** preferably under the current session key that it shares with CAM **400c.** This (series of) session key(s) is established using a protocol such as the key derivation function discussed above. The sink **300c** sends the CAM **400c** a sink counter value (**S1814, S1807**) which is used by both the sink **300c** and the CAM **400c** to derive a freshly negotiated session key (**S1815, S1808**). Then the CAM **400c** receives the super-encrypted information data from the source **200c** (**S1803, S1809**). The CAM **400c** super-decrypts the super-encrypted information using the super encrypt logic **422c** (**S1810**). Next the CAM **400c** decrypts the information itself (**S1811**) using the conditional access decryption logic **424c,** and CAM **400c** re-encrypts the information under the negotiated session key with the sink **300c** (**S1812**) using the interface encryption logic **420c**. The sink **300c** receives the re-encrypted information from CAM **400c** and decrypts the re-encrypted information using the negotiated session key and the interface decryption logic **304c** (**S1813, S1816, S1817**). The sink **300c** is now able to process information data to present it, in a useable form to the user, e.g., to be displayed, etc., on the output device **500**.

In step **S1814**, the sink **300c** preferably provides the CAM **400c** with a counter value (sink counter) which is used by the sink **300c** and the CAM **400c** to derive a fresh session key shared by the sink **300c** and the CAM **400c**. The sink **300c** preferably uses a new counter value for each iteration of the protocol.

In accordance with this embodiment, information access may be logged (or charged) each time the information program, etc., is accessed, not just the first time. Additionally, in this embodiment, the source **200c** super-encrypts the protected information using a key that implicitly (at least) authenticates the CAM **400c** as a preventive measure against reuse of information by a pirated CAM. Furthermore, freshness may be introduced into session keys used for super-encryption by the source **200c**, thus changing the session keys used for the super-encryption, i.e. used for communicating with the CAM **400c**. Additionally, freshness may preferably be incorporated into the session keys by the legitimate sink **300c**, so that replay of an intercepted information stream to the sink **300c** will not be effectively decrypted by the sink device. Furthermore, replay of an intercepted information stream to the legitimate CAM **400c** results in additional logging of access, thus piracy can be detected or the pirate will simply be billed for the additional access.

In this embodiment, the CAM **400c** can log (bill) at any granularity, and the set top box **100c** (source and/or sink) need not be aware of the logging (billing) policy. Additionally, this embodiment may be used with 2-party, 3-party, and/or PC architectures.

**Combined Super-encryption/re-encryption and Title-based PCR**

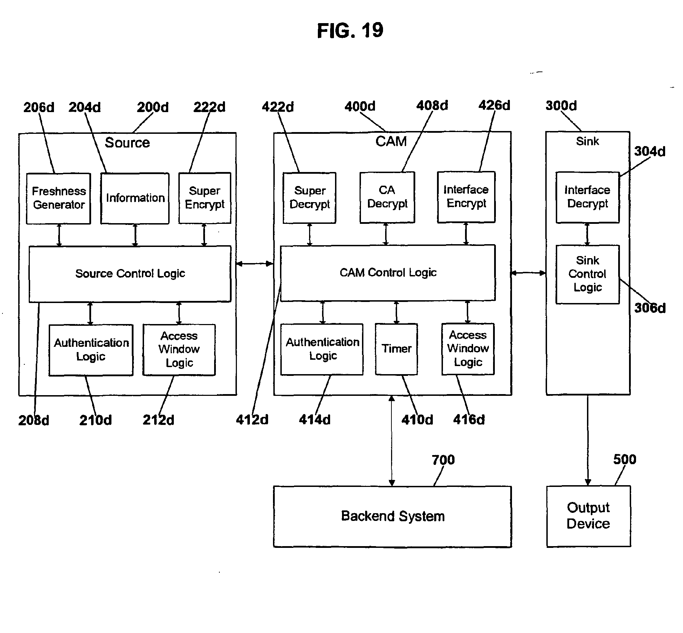

The embodiment of Figure 19 combines the attributes of the Title-Based PCR with Super-encryption/re-encryption. It should be appreciated that architecture (of Figure 19) which performs the protocol of the present embodiment generally comprises a combination of Figures 10 and 17. For purposes of Figure 19, the source **200d** and the CAM **400d** include all of the elements shown in the source **200** and the CAM **400** of Figure 10.

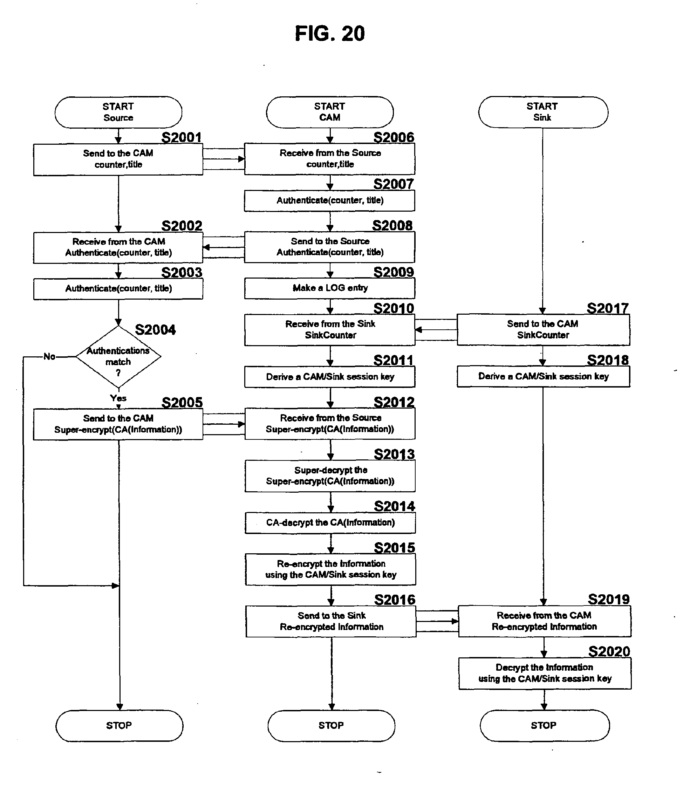

As shown in Figure 20, the source **200d** provides the CAM **400d** with a message preferably including a counter value and the title of the information, e.g., program to be accessed (**S2001**, **S2006**). The source **200d** and the CAM **400d**, each independently authenticate the message using the authentication logic **414d** of the CAM **400d** respectively (**S2007**). The source **200d** receives the authenticated message from the CAM **400d** (**S2008**, **S2002**) and the authentication logic **210d** of the source **200d** verifies the authenticated message (**S2003**). If the authenticated messages match (**S2004**), then the source **200d** sends super-encrypted information to the CAM **400d**, where it is super-decrypted (**S2005**, **S2012**, **S2013**). The CAM **400d** then decrypts the information using the super decryption logic **422d** (which in this embodiment, may be the same as the conditional access decryption logic **408d** (**S2014**). At step **S2017**, the sink **300d** provides the CAM **400d** with a counter value (sink count) which is used by the sink **300d** and the CAM **400d** to derive a fresh session key shared by the sink **300d** and the CAM **400d** (**S2010**, **S2011**, **S2018**). The sink **300d** preferably uses a new counter value for different information. The CAM **400d** re-encrypts the information under the negotiated session key with the sink **300d** (**S2015**) using the interface encryption logic **426d**. The sink **300d** receives the re-encrypted information from CAM **400d** and decrypts the re-encrypted information using the negotiated session key and the interface decryption logic **304d** (**S2020**). The sink **300d** is now able to process the information data in a useable form to the user via, e.g., the output device **500**.

This embodiment takes advantage of the fact that authentication is potentially stronger than encryption for reasons of high-speed data encryption and decryption implementation considerations.

**Authenticating the media source**

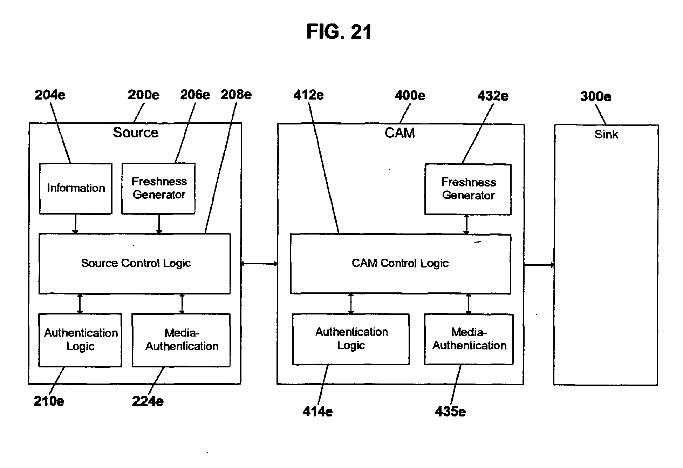

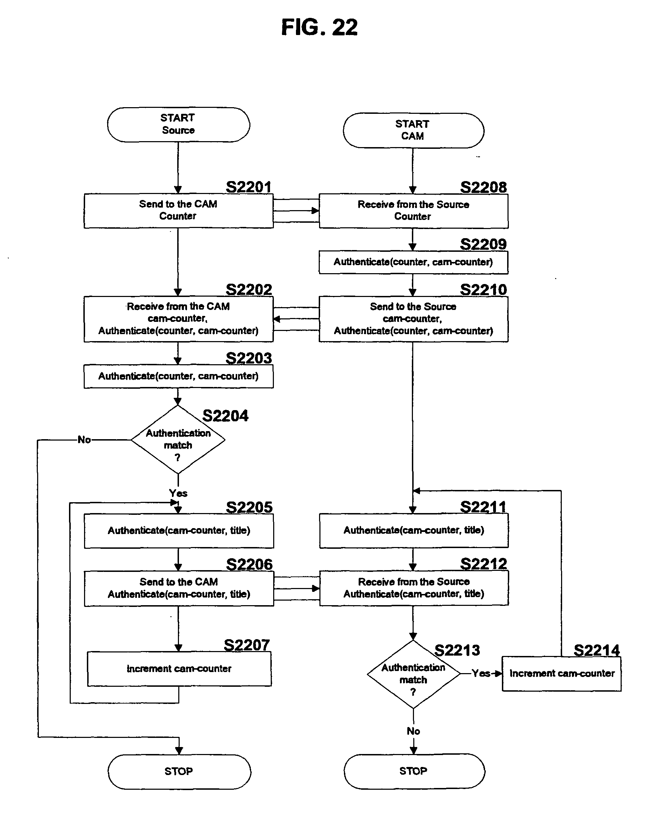

In the above embodiments, the PCR protocols do not prevent replay of the information stream from the source to the CAM because they cannot differentiate information bits from replayed information bits. In certain business models, this may be adequate because such replay can result in logging. However, if the model requires that the CAM see proof that the information stream is being generated at the current play time by the source device **200**, the protocol of Figure 22, using the architecture of Figure 21, may be used.

In embodiment illustrated in Figure 21, the source **200e** preferably contains an information receiving/generating device, a freshness generator **206e**, source control logic **208e**, authentication logic **210e**, and media authentication logic **224e**. The CAM **400e**, preferably contains a freshness generator **432e**, a CAM control logic **412e**, an authentication logic **414e** and media authentication logic **435e**. The freshness generator **432e** may be a counter or a random number generator. The operation of the embodiment shown in Figure 21 is illustrated in the flow diagram shown in Figure 22. It should be appreciated that the protocol shown Figure 22 is preferably performed by the source control logic **208e** and the CAM control logic **412e** respectively.

The source **200e** preferably provides the CAM **400e** with a message which includes a counter value from the freshness generator **206e** (source counter) (**S2201**, **S2208**). The freshness generator is preferably a counter in this embodiment. The CAM **400** authenticates the message (**S2209**) using authentication logic **412**. The CAM **400** also produces another counter value (CAM_counter) from the freshness generator **428e** and sends the authenticated message and the value CAM_counter to the source **200e**

(**S2210**, **S2202**). The source **200e** authenticates the message (**S2203**) using the authentication logic **210e.** The CAM **400d** authenticates the authenticated message and waits for a response from the source **200d** (**S2211**). In this embodiment, the freshness generator **206e** is preferably a counter. Upon verifying the authenticated message (S2204), the source **200e** sends the CAM **400e** another message including the authenticated value CAM_counter and the title of the information, e.g., the program, executable, etc., to be accessed (**S2205, S2206**), and increments the value of CAM-_counter (**S2207**). The CAM **400e** verifies the message generated in step **S2205** with the message authenticated by the CAM in step **S2211** (**S2112, S2213**), and upon successful verification, the CAM **400e** increments the value of CAM_counter (**S2214**) and returns to step **S2211.** If the authentication in step **S2113** fails, the CAM **400e** refuses to process information further.

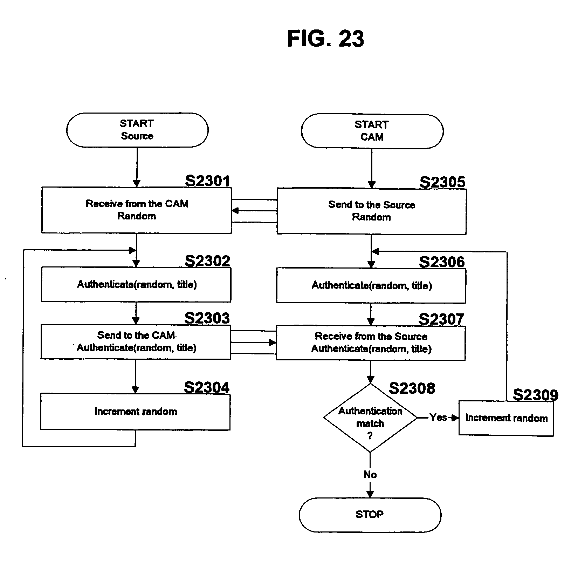

A second protocol is illustrated in Figure 23 in which the freshness generator **432e** in the CAM **400e** is preferably a random number generator. The CAM **400e** provides the source **200e** with a random number (**S2305, S2301**) from the freshness generator **432e**. Both the source **200e** and the CAM **400e** authenticate the random number and the title of the program, executable, etc., to be accessed, i.e. authenticate(random, title) (**S2302, S2306**)**.** The source **200e** sends the authentication from authentication logic **210e** (**S2303**) to CAM **400e** (**S2307**) and increments the value of the random number (**S2304**). Upon verification, the CAM **400e** increments the random number (**S2308, S2309**) and the protocol continues. If the CAM **400e** is unable to verify the authentication of the random number, it refuses to further process information. After sending the authenticated random and title to the CAM **400e** in step **S2303**, the source **200e** increments the value of the random number.

Since the protocols illustrated in Figures 22 and 23 do not authenticate the information stream directly, but prove that the source **200e** is accessing information, it cannot distinguish from the specified title (i.e., the source **200e** believes that it is accessing authentic information). Therefore, it is necessary to repeat this protocol during information play. The frequency of repetition depends upon the threat. For example, if the goal is to require play from the original media, the protocol must be repeated often enough so that it is not worth the trouble to move the media between source devices between challenges. The CAM **400e** must not continue to process information decryption if it does not receive the expected authenticated message.

The efficacy of this protocol depends upon it being difficult to produce a pirated media and pirated source devices. Pirating source devices may be difficult if legitimate source devices contain proprietary technology that a pirate cannot efficiently produce on a large scale. Alternatively, each legitimate source device may have verifiable secrets that each can use to authenticate itself to a CAM. Individualization of these secrets may be combined with the use of pairing as an anti-piracy enforcement mechanism.

## Combined Super-encryption/Re-encryption, Title-based PCR, and Media Authentication

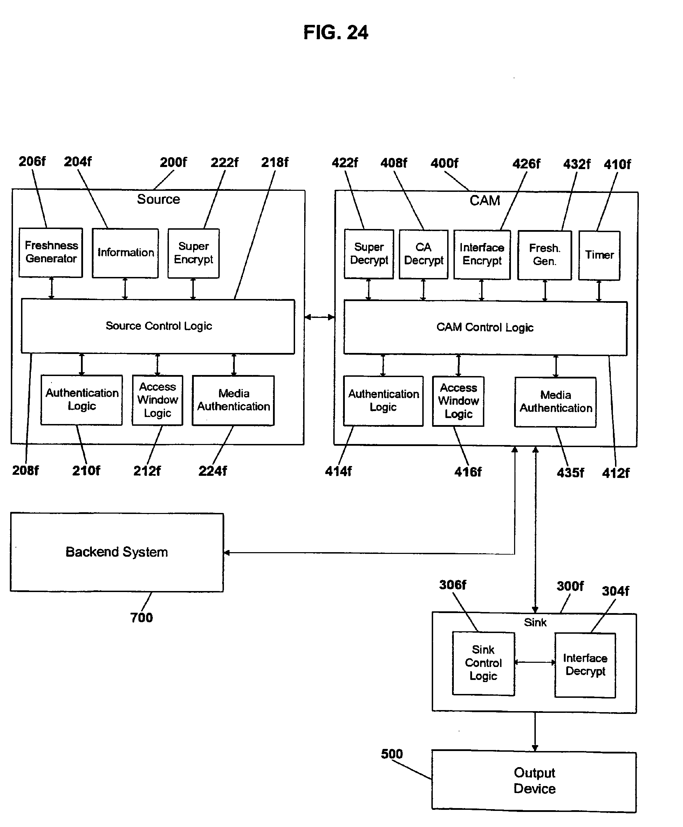

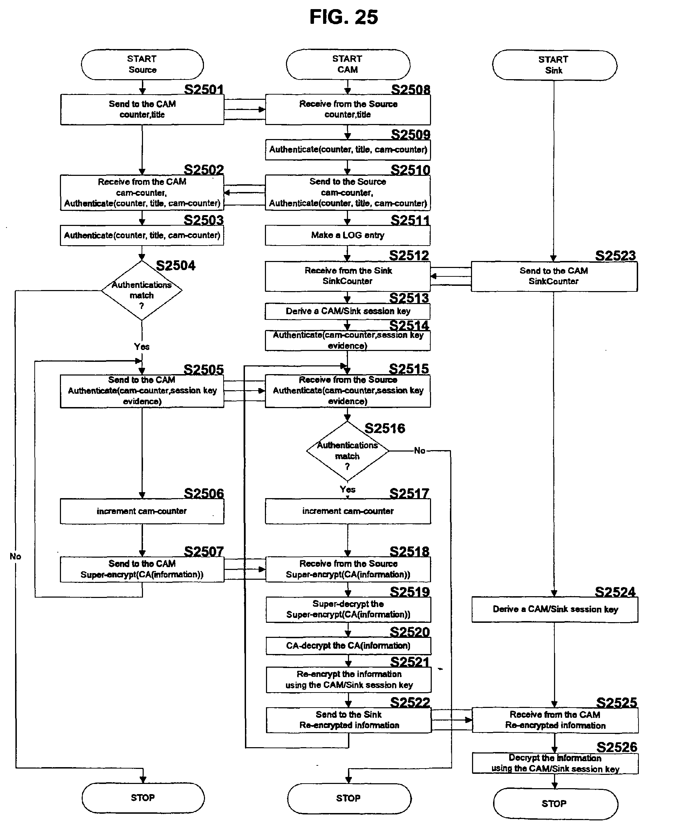

The embodiment of Figure 24 combines super-encryption/re-encryption with title-based PCR and media authentication . It should be appreciated that the architecture which performs the protocol of the present embodiment (e.g. Figure 25) generally comprises combination of the architectures illustrated in Figures 10, 17, and 21. For purposes of Figure 24 the source **200f** and the CAM **400f** include all essential elements shown in the source **200** and the CAM **400** of Figure 10 and all essential elements of the source **200c** and the CAM **400c** of Figure 17.

As shown in the flow diagram of Figure 25, the source **200f** provides the CAM **400f** with a message containing a source counter value and the title of the program to be accessed (steps **S2501, S2508**). The CAM **400f** authenticates the message (**S2509**) using authentication logic **414f** and provides the authenticated message to the source **200f** (**S2510**). The CAM **400f** also produces another counter value (CAM_counter) from freshness generator (a.k.a. cam counter) **432** and sends the authenticated message and value CAM_counter to the source **200f** (**S2510, S2502**), where, in this embodiment, the freshness generator **206f** is preferably a counter. The CAM **400f** uses the title to key the information access and process, e.g., to decrypt and to make a log entry (**S2511**). The source **200f** verifies the authenticity of the message using authentication logic **210f** (**S2504**). If verification fails, the source **200f** stops generating information and the protocol ends. The sink **300f** sends the CAM **400f** a sink counter value (**S2523, S2512**) which is used by both the sink **300f** and the CAM **400f** to derive a negotiated session key (**S2513, S2524**). Upon verifying the authenticated message (**S2504**), the source **200f** sends the CAM **400f** another message including the authenticated value of CAM-counter and session key evidence (**S2505, S2515**). The CAM **400f** verifies the authenticity of the message by determining if it matches the authentication previously preformed by the CAM **400f** in step **S2514**. If verification fails, the CAM **400f** stops processing information and the protocol ends. If the authenticated messages verify, the CAM **400f** increments the freshness generator **432f**, e.g., a cam-counter (**S2517**). Then the CAM 400f receives the super-encrypted information data from the source **200f** (**S2507, S2318**). The CAM 400f super-decrypts the super-encrypted information using the super-decryption logic **422f** (**S2519**). The CAM **400f** decrypts the information per se (**S2520**) using the CA decryption logic **408f**, and then re-encrypts the information under the negotiated session key with the sink **300f** (**S2521**) using the interface decryption logic **426f.** The sink **300f** receives the re-encrypted information from CAM **400f** (**S2523, S2525**) and decrypts the re-encrypted information using the negotiated session key and the interface decryption logic **306f** (**S2526**). The sink **300f** is now able to process the information data in a form useable to the user.

Although the protocol of this embodiment has been described as using a freshness generator **432** in the form of a counter in the CAM **400f** for authentication, it can also use a random number generator in the CAM **400f** in place of the cam counter in a manner similar to that discussed above in connection with Figures 21 and 23.

If the title field is skipped in this embodiment, the protocol will preferably combine only super-encryption/re-encryption and media authentication. Additionally, the session key evidence provided by the source **200f** to the CAM **400f** in this embodiment is preferably sufficient for the CAM **400f** to freshly confirm that the source **200f** knows the correct session key. For example, the session key evidence may be a component of the session key itself, a function of the key, or other evidence bound to that key. The authentication message preferably does not compromise the session key.

**Data based PCR with NVM (non-volatile memory) on STB and BBRAM (Battery Backed RAM) on CAM.**

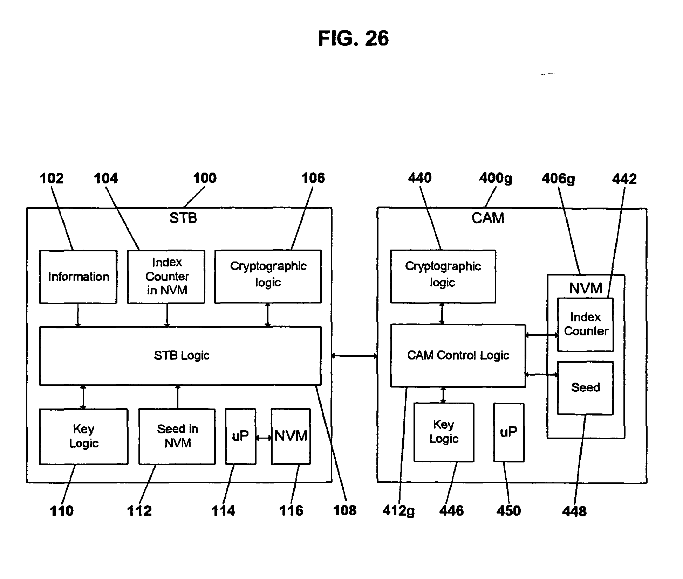

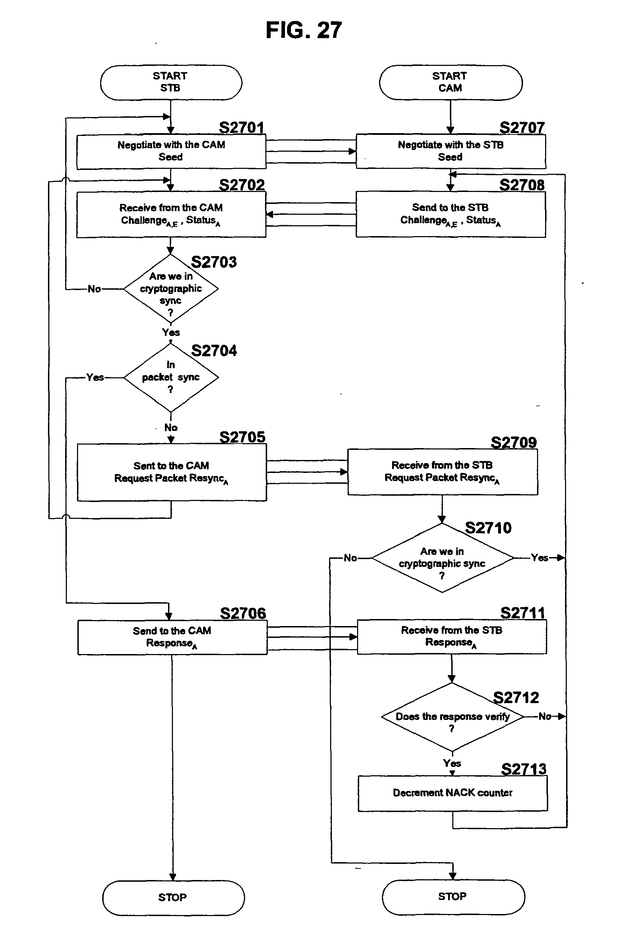

The operation of Figure 26 will now be described with references to the flow diagram in Figure 27. This embodiment uses a non volitile memory ("NVM") **116** on the set top box **100** (STB) and a battery backed RAM ("BBRAM") **406g** on the CAM **400g.** Additionally, while the set top box STB **100** is described as comprising a combined source and sink device, it should be appreciated that the STB **100** may only include the source or the sink, the other being external to the STB **100.**

In this embodiment, Figure 26, the STB **100** (which may be a combination of the source **200** and the sink **300)** preferably contains a information receiving/generating device **102,** an index counter **104** in an NVM **116,** cryptographic logic device **106,** an STB logic device **108,** a key logic **110,** and seed generation logic **112** in the NVM **116.** Additionally, the CAM **400g** preferably contains cryptographic logic **440g,** an index counter **442** in an NVM **406g,** a key logic **446,** and a seed generation logic **448** in the NVM **406g.** It should be appreciated that the protocol shown Figure 27 will preferably be performed by the STB control logic **108** and the CAM control logic **444** respectively.

As shown in the flow diagram of Figure 27, the STB **100,** provides the CAM **400** with a negotiation message which establishes a new shared secret value (seed) that will be used to authenticate the CAM **400g** to the set top box **100 (S2701, S2707).** This message occurs only when the CAM **400g** and the STB **100** are not in cryptographic sync. The information provided by the information provider is preferably provided in discrete packets of information, and the STB **100** and the CAM **400** both count the number of packets of information they are provided, using an index counter **104** preferably contained within the NVM **116** and an index counter **442** preferably contained within a NVM **406g,** in the STB **100** and CAM **400g** respectively. After the message is received by the CAM **400g,** the STB **100** and the CAM **400** must be synchronized on their respective counts; that is, they begin counting from the same packet.

At step **S2708** the CAM **400g** provides the STB **100** with a message including a Challenge which is authenticated and encrypted, and a status which is authenticated **(S2708, S2702).** The status indicates to the STB **100** whether it (the STB **100**) is still cryptographically synchronized with the CAM **400g (S2703),** i.e. in cryptographic sync.

In other words, the status indicates whether the CAM **400g** and the STB **100** are still using the same session key. That is, the status indicates whether the authentication and encryption are done using the previously defined Authenticate and Encrypt subroutines respectively. The challenge authentication and challenge encryption are preferably separate operations. From the challenge, the STB **100** can infer the index of the packet for which it must generate a response (i.e., the challenged packet). The STB 100 also infers, from the challenge, the packet index after which the generated response must be sent (i.e., the beginning of the response window, which follows the challenge window). If the STB **100** determines it is not in cryptographic sync, the protocol returns to step **S2701.** If the STB **100** and CAM **400g** are in cryptographic sync, then, in step **S2504,** the STB **100** determines if it is in packet sync with CAM **400g.** If the STB **100** determines that it is not in sync **(S2704),** the STB **100** sends the CAM **400g** an authenticated request for packet resync **(S2706, S2709).** If the STB **100** and CAM **400g** are in packet sync **(S2704)** the operation advances to step **S2705** where the STB **100** provides CAM **400g** with an authenticated response **(S2705, S2710).** The authenticated response is calculated from the challenged packet, and it may depend upon the information packet that the STB **100** sent, and upon the plain text that corresponds to that packet. The CAM **400g** then verifies the authenticated response **(S2711).** If the response is received during the response window and is verified, then CAM **400g** decrements the NACK counter. Control then returns to step **S2708.**

Preferably, the authenticated response in step **S2705** is not sent immediately after it is calculated. Rather it may not be sent until the beginning of the response window, but preferably must be sent before the end of that window. Alternatively, an Encrypted response may be sent by the STB **100** in step **S2705** instead of the Authenticated response, in which case the CAM **400g,** applies the Confirm subroutine. In this case, the Hash(Response), rather than the response, may be encrypted.

The windows described above correspond to several distinguished indices. The challenge window begins when the challenge is sent, and ends just before the response window begins. Preferably, the challenged packet index is within the challenge window, and is preferably randomized within the window. The challenge window is preferably of a random length which is defined by the CAM **400g** each time the protocol shown in Figure 27 is performed. The response window is preferably of a fixed short length, although it should be large enough to allow the response from the STB **100 to** be delivered reliably to the CAM **400g.**

The CAM **400** delivers its new challenge after the response window ends. This challenge acknowledges the response provided by the STB **100,** if the response verifies (e.g., if the CAM **400** calculates the same response).

If the STB **100** does not satisfactorily receive an anticipated challenge, the STB **100** will suspend information packet transmittal, preferably by no longer sending packets to the CAM **400g** and by no longer interpreting packets returned from the CAM **400g.**

In addition to the challenged packet index and the beginning of the response window, the STB **100** infers a value RDM from the challenge. The value RDM is used to authenticate and encrypt subsequent messages; that is, the value RDM becomes the session key used instead of the negotiated session key. Preferably, the first session key authenticates the CAM **400g** to the STB **100,** and subsequent session keys confirm to the STB **100** that it is still communicating with the CAM **400g,** and confirm to the CAM **400g** that it is still communicating with the same STB **100** with which it originally negotiated a key.

Although the STB **100** responds to challenges from the CAM **400g,** it is actually the legitimate operation of the paired CAM **400g** that is being verified by the STB **100.** The STB **100** will refuse to communicate information packets if it does not receive a challenge, e.g., from the paired CAM **400g.** Preferably, if the legitimate CAM **400g** detects too many violations (such as due to the presence of a pirated CAM), it will refuse to generate a challenge, and the STB **100** will reject the pirated CAM. The CAM 400g accumulates NACKs (negative acknowledgments) as a means of tracking potential violations.

The protocol establishes a shared secret value the first time the STB **100** powers up with a new CAM **400g.** If the challenge and status are OK, the STB **100** sets a NACK-Request flag, in a microprocessor **114** on the STB **100,** and writes it and RDM into the NVM **116.** When the response is computed by the microprocessor **114** on the STB **100,** this response (with the current associated value of RDM) is held in the NVM **116** until communications with the CAM **400g** and processing, with respect to this response, have been concluded. It should be appreciated that in Figure 26, the microprocessor **114** and NVM **116** are depicted schematically, as opposed to architecturally.

On the CAM **400g,** a NACK is charged or accumulated at the beginning of each response window, and the NACK counter is decremented (e.g., a NACK is unchanged) if the correct response is received by the end of the response window. Whenever the CAM **400g** issues a new challenge, ant current challenge ends. In particular, if the CAM **400g** is currently in a response window, that response window ends. The CAM **400g** preferably contains a microprocessor **450,** schematically illustrated in Figure 26, that computes a response and determines the NACK status, the computed response and the NACK status of the challenge are written to the NVM **406g** on the CAM **400g.**

The shared secret value (seed) which is negotiated may, for example, result from the use of a KDF variable such as a counter together with a long-term shared secret value.

If the response is early (i.e. delivered before the response window begins) but authentic in that the encrypted response message header, if any, sent with the authenticated response is correct, the CAM **400g** charges a NACK and issues a new challenge (including a new value of RDM), thus prematurely ending the current challenge.

If an authenticated request for packet resync verifies correctly, the CAM **400g** sets itself the current packet index of the STB **100,** and issues a new challenge, thus prematurely ending the current challenge.

The CAM **400g** sets a CAM flag during processing of a shared secret value negotiation message which has the NACK-Request flag set. The CAM **400g** resets the CAM flag in response to a subsequent negotiation message which does not have the NACK-Request flag set, or upon receipt of information packets, or upon exceeding the negotiation message retry or time-out limit if this tracking capability is implemented on the CAM. A NACK is accumulated on the CAM **400g** in response to a negotiation message which has the NACK-Request flag set, unless the tracking capability is implemented and the CAM flag is already set upon receipt of the message. The STB **100** does not accept the returned challenge message if the CAM flag value in status does not match the NACK-Request flag setting of the STB **100,** in which case the STB **100** sends another negotiation message to the CAM **400g.**

In this protocol the STB does not have to be aware of the billing information, or the billing policy.

Alternatively, in this embodiment, the CAM **400g,** rather than using a BBRAM for storage, may log ahead one mini-interval. Preferably, each logging record of information access also includes the type/level and/or the title-key ID corresponding to the CA key used by the CAM **400g** to decrypt information.

Although the present invention has been fully described by way of examples with reference to the accompanying drawings, it is to be noted that various changes and modifications will be apparent to those skilled in the art. For example, it will be apparent to those of skill in the art that the PCR system(s) of the present invention can be used in conjunction with other information anti-piracy techniques such as requiring an original media as proposed by Linnartz in a paper titled "Philips Electronics Response to Call for Proposals" issued by the Data Hiding SubGroup Copy Protection Technical Working Group. Also, it will be appreciated that the various protocols and architectures described herein can be tailored to meet the security requirements of a particular application by selectively adopting portions of a given protocol and/or architecture. Therefore, unless such changes and/or modifications depart from the scope of the present invention as defined by the appended claims, they should be construed as being included therein.

**Claims**

**1.** An apparatus for preventing unauthorised access to information, comprising:

a non-renewable device (100) configured to receive the information to be processed from an audio and/or video data source; and

a renewable device (400) configured to be processed for authorizing the non-renewable device (100) to process the information, said non-renewable device (100) being paired with said renewable device (400) by a shared secret, thereby enabling each of the non-renewable device (100) and the renewable device (400) to communicate with the other,

wherein the renewable device (400) is configured to communicate with the non-renewable device (100) according to a predetermined protocol using the shared secret,

wherein said non-renewable device (100) includes a control logic (208) generating a query message, and an authentication logic (210) for authenticating information contained in said query message and information contained in a response message using said shared secret thereby generating a non-renewable device authentication message,

wherein the renewable device (400) includes an authentication logic (414) for authenticating the information contained in the query message and the information in the response message using said shared secret, thereby generating a renewable device authentication message, the renewable device (400) further including a control logic (412) operable to generate the response message and to provide said non-renewable device (100) with said response message and the renewable device authentication message, said non-renewable device control logic (208) being further operable to match the renewable device authentication message with the non-renewable device authentication message, and to provide the renewable device (400) with a specified program if the renewable device authentication message matches the non-renewable device authentication message,

wherein the information is encrypted and the non-renewable device (100) includes an output for outputting the information to the renewable device (400), and wherein the renewable device (400) includes a decryption logic (408) for decrypting the information, and an output for outputting the decrypted information to the non-renewable device (100), and

wherein each of said non-renewable device (100) and said renewable device (400) includes an access window logic device (212a, 416a) generating an access window, wherein access to said information is limited to the shorter of the access windows generated by said access window logic devices (212a, 416a).

2. The apparatus according to claim 1 wherein the renewable device (400) logs access to said information after providing the response message to the non-renewable device (100).

3. The apparatus according to claim 1 wherein said query message includes at least one of an arbitrary value and a title of said specified program.

4. The apparatus according to claim 3 further comprising a freshness generator (206) associated with the non-renewable device (100) for generating said arbitrary value.

5. The apparatus according to claim 4 wherein said freshness generator (206) comprises a counter.

6. The apparatus according to claim 4 wherein said freshness generator (206) comprises a random number generator.

7. The apparatus according to claim 1 wherein the information is encrypted, and said non-renewable device (100) further includes a super encryption logic (222c) for super-encrypting the information: and

wherein said renewable device (400) further includes a super-decryption logic (422c) for super-decrypting the super-encrypted information, and a decryption logic for decrypting the information.

8. The apparatus according to claim 7 wherein said renewable device (400) further includes an interface encryption logic (426c) for re-encrypting the decrypted information, and wherein said non-renewable device (100) further includes an interface decryption logic (304c) for decrypting the re-encrypted information.

9. The apparatus according to claim 8 wherein said information includes a specified program to be accessed, and wherein said non-renewable device (100) includes a control logic (306c) operable to generate a message, said renewable device (400) including a control logic operable to determine a super-decryption key from said message, and to negotiate keys for super-decryption and re-encryption.

10. The apparatus according to claim 9 wherein said non-renewable device (100) comprises a source (200c) operable to generate said message, said source (200c) including said super-encryption logic (222c) and said control logic (306c); and a sink (300c) operable to negotiate a re-encryption key, said sink (300c) including said interface decryption logic (304c) and said control logic (306c).

11. The apparatus according to claim 10 wherein said source (200c) and said sink (300c) comprises an integrated device.

12. The apparatus according to claim 10 wherein said source (200c) and sink (300c) comprises separate devices.

13. The apparatus according to claim 10 wherein said message includes a title of said specified program.

14. The apparatus according to claim 10 wherein the control logic of said renewable device (400) determines a super-decryption key based, at least in part, on the content of said message.

15. The apparatus according to claim 8 wherein said non-renewable device (100) includes a non-renewable device media authentication logic (224e) for authenticating a media on which the information to be accessed is carried out, and said renewable device (400) includes a media authentication logic (435e) for authenticating the media.

16. The apparatus according to claim 15 wherein the renewable device (400) provides an arbitrary value to the non-renewable device (100).

17. The apparatus according to claim 16 further comprising a freshness generator (432e) associated with said renewable device (400) for generating said arbitrary value.

18. The apparatus according to claim 17 wherein said freshness generator (432e) comprises a counter.

19. The apparatus according to claim 17 wherein said freshness generator (432e) comprises a random number generator.

20. The apparatus according to claim 1 wherein said non-renewable device (100) includes a non-renewable device media authentication logic (224e) for authenticating a media on which the information to be accessed is carried, and said renewable device (400) includes a media authentication logic (435e) for authenticating the media.

21. The apparatus according to claim 20 wherein said renewable device (400) provides an arbitrary value to said non-renewable device (100).

22. The apparatus according to claim 21 further comprising a freshness generator (432e) associated with said renewable device (400) for generating arbitrary value.

23. The apparatus according to claim 22 wherein said freshness generator (432e) comprises a counter.

24. The apparatus according to claim 23 wherein said freshness generator (432e) comprises a random number generator.

25. A method of preventing unauthorised access to information from an audio and/or video data source, in a system comprising a non-renewable device (100) having a control logic and a renewable device (400) having a control logic operable to perform processing operations, wherein the information is encrypted and the non-renewable device (100) includes an output for outputting the information to the renewable device (400), and wherein the renewable device (400) includes a decryption logic (408) for decrypting the information, and an output for outputting the decrypted information to the non-renewable device (100), the method comprising the steps of:

pairing the non-renewable device (100) with the renewable device (400) by performing said processing operations on said renewable device (400);
selectively authenticating messages exchanged between the non-renewable (100) and renewable devices (400) and sending an authenticated message based on said selected messages from said one of the non-renewable and renewable device (100,400) to the other of said non-renewable and renewable devices (100,400);
verifying the authenticated message in the other of said non-renewable and renewable devices (100, 400); and authorizing access to said information,
wherein each of said non-renewable device (100) and said renewable device (400) includes an access window logic device (212a, 416a) for setting an amount of an access window remaining, and further comprising the steps of: generating an access window at the non-renewable device (100); generating an access window at the renewable device (400); and limiting access to the shorter one of the access windows generated at the non-renewable and renewable devices (100, 400).

26. The method according to claim 25 wherein said step of pairing further comprises the steps of:

generating an ID value for the non-renewable device (100);
generating an ID value for the renewable device (400);
generating at least one certificate based on the ID value for said non-renewable device (100) and the ID value for said renewable device (400); and
sending said at least one certificate to at least one of the non-renewable and renewable devices (100, 400).

27. The method according to claim 26 wherein said ID value for said renewable device (400) comprises a public key.

28. The method according to claim 26 wherein the step of generating the ID value for the non-renewable device (100) further comprises sending the ID value to the renewable device (400).

29. The method according to claim 26 wherein said system includes a backend system (700) and wherein the step of generating a certificate further comprises generating said certificate at the backend system (700).

30. The method according to claim 29 wherein said at least one certificate binds the ID value of the non-renewable device (100) to the renewable device (400).

31. The method according to claim 29 wherein said at least one certificate binds the ID value of the renewable device (400) to the non-renewable device (100).

32. The method according to claim 29 wherein said at least one certificate binds a non-renewable device public key to the non-renewable device ID value.

33. The method according to claim 32 further comprising the step of providing the at least one certificate to the non-renewable device (100) if the non-renewable device (100) does not contain the at least one certificate.

34. The method according to claim 32 wherein said at least one certificate binds a renewable device public key to the renewable device ID value.

35. The method according to claim 26 wherein the non-renewable device (100) comprises a source device (200).

36. The method according to claim 26 wherein the non-renewable device (100) comprises a sink device (300).

37. The method according to claim 25 wherein said system includes a backend system (700) and said step of pairing further comprises the steps of:

generating an ID value for the non-renewable device (100);
determining if the non-renewable device (100) contains an Entity_Certificate;
sending said Entity_Certificate to said renewable device (400) and the backend system (700);
determining if said backend system (700) contains another Entity_Certificate;
sending said renewable device (400) one of said Entity_Certificate and said another Entity Certificate; and
sending said renewable device (400) a Cross_Certificate.

38. The method according to claim 25 wherein said system includes a backend system (700) and said step of pairing further comprises the steps of:

generating an ID value for the non-renewable device (100);
determining secret information of the non-renewable device (100) in the backend system (700) based on the ID value for the non-renewable device (100); and
sending the secret information to said renewable device (400).

39. The method according to claim 32 further comprising the step of providing to said non-renewable device (100) the secret information if said non-renewable device (100) does not contain the secret information.

**40.** The method according to claim 38 wherein the non-renewable device (100) comprises a source device (200).

**41.** The method according to claim 39 wherein the non-renewable device (100) comprises a sink device (300).

**42.** The method according to claim 25 wherein each of the non-renewable and renewable devices (100, 400) includes an authentication logic (210,414), and wherein said step of selectively authenticating messages further comprises the steps of:

sending a query message from said non-renewable device (100) to said renewable device (400); authenticating the information contained in said query message and information in a response message using a shared secret, thereby generating a renewable device authentication message, said response message being generated by the renewable device (400); authenticating information contained in the query message and information contained in the response message using said shared secret, thereby generating a non-renewable device authentication message; and verifying that said renewable device authentication message matches said non-renewable device authentication message.

**43.** The method according to claim 42 wherein said query message includes an arbitrary value and a title of a specified program of said information, and said response message contains no information.

**44.** The method according to claim 42 further comprising the step of logging access to said information after providing the response message to the non-renewable device (100) by the renewable device (400).

**45.** The method according to claim 42 wherein the non-renewable device (100) further comprises a freshness generator (206) and further comprising the step of generating said arbitrary value.

**46.** The method according to claim 45 wherein the freshness generator (206) comprises a counter and said arbitrary value is a count value.

**47.** The method according to claim 45 wherein the freshness generator (206) comprises a random number generator and said arbitrary value is a random number.

**48.** The method according to claim 42 wherein said information is encrypted, the message includes a title of a specified program of said information, the non-renewable device (100) includes a super-encryption logic (222c), and the renewable device (400) includes a super-decryption logic (422c), and further comprising the steps of: super-encrypting said information in said non-renewable device (100); providing said super-encrypted information to said renewable device (400); and decrypting said super-encrypted information in said renewable device (400).

**49.** The method according to claim 43 wherein the renewable device (400) includes decryption logic (422c), and further comprising the step of: decrypting said information at said renewable device (400).

**50.** The method according to claim 49 wherein said non-renewable device (100) comprises a source device (200), said renewable device (400) comprises re-encryption logic, and said system further comprises a sink device (300c) which comprises decryption logic (304c), and further comprising the steps of: re-encrypting said decrypted information; providing re-encrypted information to the sink device (300c); and decrypting said re-encrypted information.

**51.** The method according to claim 50 further comprising the step of:

determining an interface encryption key to be used in said step of re-encrypting and said step of decrypting.

**52.** The method according to claim 51 wherein said step of determining an interface encryption key further comprises the steps of: sending a sink arbitrary value from said sink device (300c) to said renewable device (400); independently deriving the interface encryption key using information contained in said sink arbitrary value at said renewable device (400); and independently deriving the interface encryption key using information contained in said sink arbitrary value at said sink device (300c).

**53.** The method according to claim 48 further comprising the steps of: determining a super-encryption key used in said step of super-encrypting and said step of super-decrypting.

**54.** The method according to claim 53 wherein the step of determining a super-encryption key further comprising the steps of: using information based on said title of a specified program to determine said super-encryption key at said renewable device (400).

**55.** The method according to claim 48 wherein said message further includes an arbitrary value, and further comprising the steps of: sending a media query message from the renewable device (400) to the non-renewable device (100); authenticating information contained in said media query message and information contained in a media response message generated at said non-renewable device (100) thereby generating a non-renewable device media authenticated message; sending said media response message and said non-renewable device media authenticated message to said renewable device (100); authenticating the information contained in said media response message and the information contained in said media query message at said renewable device (400) thereby generating renewable device media authenticated message; and verifying said non-renewable device media authenticated message with said renewable device media authenticated message at said renewable device (400).

**56.** The method according to claim 55 wherein the media query message is contained in said response message.

**57.** The method according to claim 55 wherein the renewable device (400) includes a counter for generating a renewable device count value which is included in said media query message, and further comprising the steps of:

incrementing said renewable device count value at the non-renewable device (100); and
incrementing said renewable device count value at the renewable device (400) if the verification step is successful.

**58.** The method according to claim 55 wherein the renewable device (400) includes a random number generator for generating a renewable device random value which is included in said media query message, and further comprising the steps of: incrementing said renewable device random value at said non-renewable device (100); and incrementing said renewable device random value at said renewable device (400) if said verification step is successful.

**Patentansprüche**

**1.** Eine Vorrichtung zum Verhindern von unberechtigtem Zugriff auf Informationen, wobei die Vorrichtung aus Folgendem besteht:

einer nicht erneuerbaren Einheit (100), die die zu verarbeitenden Informationen von einer Audio- bzw. Videodatenquelle empfängt; und
einer erneuerbaren Einheit (400), die die nicht erneuerbare Einheit (100) anweist, die Informationen zu verarbeiten, wobei die besagte nicht erneuerbare Einheit (100) mit der besagten erneuerbaren Einheit (400) durch ein gemeinsames Geheimnis so verbunden ist, dass die nicht erneuerbare Einheit (100) und die erneuerbare Einheit (400) miteinander kommunizieren können,
wobei die erneuerbare Einheit (400) unter Verwendung des gemeinsamen Geheimnisses gemäß eines vordefinierten Protokolls mit der nicht erneuerbaren Einheit (100) kommunizieren kann,
wobei die besagte nicht erneuerbare Einheit (100) eine Kontrolllogik (208) zur Erzeugung einer Anfrage und eine Authentifizierungslogik (210) zur Authentifizierung der in der besagten Anfrage und der in einer Antwort enthaltenen Informationen unter Verwendung des gemeinsamen Geheimnisses umfasst, um damit eine Authentifizierungsnachricht der besagten nicht erneuerbaren Einheit zu erzeugen,
wobei die erneuerbare Einheit (400) eine Authentifizierungslogik (414) zur Authentifizierung der in der besagten Anfrage und der in einer Antwort enthaltenen Informationen unter Verwendung des gemeinsamen Geheimnisses umfasst, um damit eine Authentifizierungsnachricht der besagten erneuerbaren Einheit (400) zu erzeugen,
wobei die erneuerbare Einheit (400) weiter eine Kontrolllogik (412) zur Erzeugung und Übermittlung der besagten Antwort sowie der Authentifizierungsnachricht der besagten erneuerbaren Einheit (400) an die besagte nicht erneuerbare Einheit (100) umfasst, wobei die Kontrolllogik (208) der besagten nicht erneuerbaren Einheit des Weiteren die Authentifizierungsnachricht der besagten erneuerbaren Einheit (400) mit der Authentifizierungsnachricht der besagten nicht erneuerbaren Einheit (100) vergleicht und der erneuerbaren Einheit (400) ein bestimmtes Programm übermittelt, wenn die Authentifizierungsnachricht der besagten erneuerbaren Einheit (400) mit der Authentifizierungsnachricht der besagten nicht erneuerbaren Einheit (100) übereinstimmt,

wobei die Informationen verschlüsselt sind und die nicht erneuerbare Einheit (100) einen Ausgang zur Ausgabe der Informationen an die erneuerbare Einheit (400) aufweist und wobei die erneuerbare Einheit (400) eine Entschlüsselungslogik (408) zur Entschlüsselung der Informationen und einen Ausgang zur Ausgabe der entschlüsselten Informationen an die nicht erneuerbare Einheit (100) umfasst, und

wobei die besagte nicht erneuerbare Einheit (100) und die besagte erneuerbare Einheit (400) je ein Logikgerät (212a, 416a) zur Erzeugung eines Zugriffsfensters aufweisen, wobei der Zugriff auf die besagten Informationen auf das kürzere der von den besagten Logikgeräten (212a, 416a) erzeugten Zugriffsfenster beschränkt ist.

2. Die Vorrichtung nach Anspruch 1, wobei die erneuerbare Einheit (400) nach Übermittlung der Antwort an die nicht erneuerbare Einheit (100) den Zugriff auf die besagten Informationen protokolliert.

3. Die Vorrichtung nach Anspruch 1, wobei die besagte Anfrage mindestens eines der Folgenden enthält: einen beliebigen Wert und/oder einen Titel des besagten bestimmten Programms.

4. Die Vorrichtung nach Anspruch 3, weiter bestehend aus einem mit der nicht erneuerbaren Einheit (100) assoziierten Frischegenerator (206) zur Erzeugung des besagten beliebigen Werts.

5. Die Vorrichtung nach Anspruch 4, wobei der besagte Frischegenerator (206) einen Zähler umfasst.

6. Die Vorrichtung nach Anspruch 4, wobei der besagte Frischegenerator (206) einen Zufallszahlengenerator umfasst.

7. Die Vorrichtung nach Anspruch 1, wobei die Informationen verschlüsselt sind und die besagte nicht erneuerbare Einheit (100) weiter eine Superverschlüsselungslogik (222c) zur Superverschlüsselung der Informationen umfasst und

wobei die besagte erneuerbare Einheit (400) weiter eine Superentschlüsselungslogik (422c) zur Superentschlüsselung der superverschlüsselten Informationen und eine Entschlüsselungslogik (422c) zur Entschlüsselung der Informationen umfasst.

8. Die Vorrichtung nach Anspruch 7, wobei die besagte erneuerbare Einheit (400) weiter eine Schnittstellenverschlüsselungslogik (426c) zur Neuverschlüsselung der verschlüsselten Informationen umfasst und wobei die besagte nicht erneuerbare Einheit (100) weiter eine Schnittstellenentschlüsselungslogik (304c) zur Entschlüsselung der neuverschlüsselten Informationen umfasst.

9. Die Vorrichtung nach Anspruch 8, wobei die besagten Informationen ein bestimmtes zu verwendendes Programm enthalten und wobei die besagte nicht erneuerbare Einheit (100) eine Kontrolllogik (306c) zur Erzeugung einer Nachricht umfasst und die besagte erneuerbare Einheit (400) eine Kontrolllogik zur Ermittlung eines Superentschlüsselungsschlüssels von der besagten Nachricht und zur Aushandlung von Schlüsseln für die Superentschlüsselung und die Neuverschlüsselung umfasst.

10. Die Vorrichtung nach Anspruch 9, wobei die besagte nicht erneuerbare Einheit (100) Folgendes umfasst: eine Quelle (200c) zur Erzeugung der besagten Nachricht, wobei die besagte Quelle (200c) die besagte Superverschlüsselungslogik (222c) und die besagte Kontrolllogik (306c) umfasst, und eine Senke (300c) zur Aushandlung eines Neuverschlüsselungsschlüssels, wobei die besagte Senke (300c) die besagte Schnittstellenentschlüsselungslogik (304c) und die besagte Kontrolllogik (306c) umfasst.

11. Die Vorrichtung nach Anspruch 10, wobei die besagte Quelle (200c) und die besagte Senke (300c) ein integriertes Gerät darstellen.

12. Die Vorrichtung nach Anspruch 10, wobei die besagte Quelle (200c) und die besagte Senke (300c) separate Geräte darstellen.

13. Die Vorrichtung nach Anspruch 10, wobei die besagte Nachricht einen Titel des besagten bestimmten Programms enthält.

14. Die Vorrichtung nach Anspruch 10, wobei die Kontrolllogik der besagten erneuerbaren Einheit (400) einen Superentschlüsselungsschlüssel ermittelt, der mindestens teilweise auf dem Inhalt der besagten Nachricht basiert.

15. Die Vorrichtung nach Anspruch 8, wobei die besagte nicht erneuerbare Einheit (100) eine Medienauthentifizierungslogik (224e) der nicht erneuerbaren Einheit umfasst, die ein Medium authentifiziert, auf dem die aufzurufenden Informationen gespeichert sind, und die besagte erneuerbare Einheit (400) eine Medienauthentifizierungslogik (435e) umfasst, die das Medium authentifiziert.

16. Die Vorrichtung nach Anspruch 15, wobei die erneuerbare Einheit (400) einen beliebigen Wert an die nicht erneuerbare Einheit (100) übermittelt.

17. Die Vorrichtung nach Anspruch 16, weiter bestehend aus einem mit der besagten erneuerbaren Einheit (400) assoziierten Frischegenerator (432e) zur Erzeugung des besagten beliebigen Werts.

18. Die Vorrichtung nach Anspruch 17, wobei der besagte Frischegenerator (432e) einen Zähler umfasst.

19. Die Vorrichtung nach Anspruch 17, wobei der besagte Frischegenerator (432e) einen Zufallszahlengenerator umfasst.

20. Die Vorrichtung nach Anspruch 1, wobei die besagte nicht erneuerbare Einheit (100) eine Medienauthentifizierungslogik (224e) umfasst, die ein Medium authentifiziert, auf dem die aufzurufenden Informationen gespeichert sind, und die besagte erneuerbare Einheit (400) eine Medienauthentifizierungslogik (435e) umfasst, die das Medium authentifiziert.

21. Die Vorrichtung nach Anspruch 20, wobei die erneuerbare Einheit (400) einen beliebigen Wert an die nicht erneuerbare Einheit (100) übermittelt.

22. Die Vorrichtung nach Anspruch 21, weiter bestehend aus einem mit der besagten erneuerbaren Einheit (400) assoziierten Frischegenerator (432e) zur Erzeugung eines beliebigen Werts.

23. Die Vorrichtung nach Anspruch 22, wobei der besagte Frischegenerator (432e) einen Zähler umfasst.

24. Die Vorrichtung nach Anspruch 23, wobei der besagte Frischegenerator (432e) einen Zufallszahlengenerator umfasst.

25. Ein Verfahren zum Verhindern von unberechtigtem Zugriff auf Informationen von einer Audio- bzw. Videodatenquelle in einem System, das eine nicht erneuerbare Einheit (100) mit einer Kontrolllogik und eine erneuerbare Einheit (400) mit einer Kontrolllogik zur Ausführung von Verarbeitungsfunktionen umfasst, wobei die Informationen verschlüsselt sind und die nicht erneuerbare Einheit (100) einen Ausgang zur Ausgabe der Informationen an die erneuerbare Einheit (400) umfasst und wobei die erneuerbare Einheit (400) eine Entschlüsselungslogik (408) zur Entschlüsselung der Informationen und einen Ausgang zur Ausgabe der entschlüsselten Informationen an die nicht erneuerbare Einheit (100) umfasst, wobei das Verfahren aus den folgenden Schritten besteht:

Verbindung der nicht erneuerbaren Einheit (100) mit der erneuerbaren Einheit (400) durch Ausführen der besagten Verarbeitungsfunktionen auf der besagten erneuerbaren Einheit (400);
selektive Authentifizierung der zwischen der nicht erneuerbaren Einheit (100) und der erneuerbaren Einheit (400) ausgetauschten Nachrichten und Übermittlung einer authentifizierten Nachricht von einer der besagten nicht erneuerbaren bzw. erneuerbaren Einheiten (100, 400) an die andere eine der besagten nicht erneuerbaren bzw. erneuerbaren Einheiten (100, 400) auf Basis der besagten selektiv authentifizierten Nachrichten;
Überprüfung der authentifizierten Nachricht in der anderen einen der besagten nicht erneuerbaren bzw. erneuerbaren Einheiten (100, 400); und
Autorisierung des Zugriffs auf die besagten Informationen,
wobei die besagte nicht erneuerbare Einheit (100) und die besagte erneuerbare Einheit (400) je ein Logikgerät (212a, 416a) zum Einstellen eines verbleibenden Zeitraums eines Zugriffsfensters aufweisen, wobei das Einstellen weiter aus den folgenden Schritten besteht: Erzeugung eines Zugriffsfensters an der nicht erneuerbaren Einheit (100), Erzeugung eines Zugriffsfensters an der erneuerbaren Einheit (400); und Zugriffsbeschränkung auf das kürzere der von der nicht erneuerbaren bzw. der erneuerbaren Einheit (100, 400) erzeugten Zugriffsfenster.

26. Das Verfahren nach Anspruch 25, wobei der besagte Schritt der Verbindung weiter aus den folgenden Schritten besteht:

Erzeugung eines ID-Werts für die nicht erneuerbare Einheit (100);

Erzeugung eines ID-Werts für die erneuerbare Einheit (400);

Erzeugung von mindestens einem auf dem ID-Wert der besagten nicht erneuerbaren Einheit (100) und dem ID-Wert der besagten erneuerbaren Einheit (400) basierten Zertifikat; und

Übermittlung des besagten mindestens einen Zertifikats an mindestens eine der nicht erneuerbaren bzw. erneuerbaren Einheiten (100, 400).

27. Das Verfahren nach Anspruch 26, wobei der besagte ID-Wert für die besagte erneuerbare Einheit (400) einen öffentlichen Schlüssel umfasst.

28. Das Verfahren nach Anspruch 26, wobei der Schritt der Erzeugung des ID-Werts für die nicht erneuerbare Einheit (100) weiter die Übermittlung des ID-Werts an die erneuerbare Einheit (400) umfasst.

29. Das Verfahren nach Anspruch 26, wobei das besagte System ein Back-End-System (700) umfasst und wobei der Schritt der Erzeugung eines Zertifikats weiter aus der Erzeugung des besagten Zertifikats im Back-End-System (700) besteht.

30. Das Verfahren nach Anspruch 29, wobei das besagte mindestens eine Zertifikat den ID-Wert der nicht erneuerbaren Einheit (100) an die erneuerbare Einheit (400) bindet.

31. Das Verfahren nach Anspruch 29, wobei das besagte mindestens eine Zertifikat den ID-Wert der erneuerbaren Einheit (400) an die nicht erneuerbare Einheit (100) bindet.

32. Das Verfahren nach Anspruch 29, wobei das besagte mindestens eine Zertifikat einen öffentlichen Schlüssel der nicht erneuerbaren Einheit (100) an den ID-Wert der nicht erneuerbaren Einheit (100) bindet.

33. Das Verfahren nach Anspruch 32, weiter bestehend aus dem Schritt der Übermittlung des mindestens einen Zertifikats an die nicht erneuerbare Einheit (100), wenn die nicht erneuerbare Einheit (100) nicht das mindestens eine Zertifikat enthält.

34. Das Verfahren nach Anspruch 32, wobei das besagte mindestens eine Zertifikat einen öffentlichen Schlüssel der erneuerbaren Einheit an den ID-Wert der erneuerbaren Einheit bindet.

35. Das Verfahren nach Anspruch 26, wobei die nicht erneuerbare Einheit (100) eine Quellenanordnung (200) umfasst.

36. Das Verfahren nach Anspruch 26, wobei die nicht erneuerbare Einheit (100) eine Senkenanordnung (300) umfasst.

37. Das Verfahren nach Anspruch 25, wobei das besagte System ein Back-End-System (700) umfasst und wobei der Schritt der Verbindung weiter aus den folgenden Schritten besteht:

Erzeugung eines ID-Werts für die nicht erneuerbare Einheit (100);

Ermittlung, ob die nicht erneuerbare Einheit (100) ein Entity_Zertifikat enthält;

Übermittlung des besagten Entity_Zertifikats an die besagte erneuerbare Einheit (400) und das Back-End-System (700);

Ermittlung, ob das besagte Back-End-System (700) ein weiteres Entity_Zertifikat enthält;

Übermittlung eines der besagten Entity_Zertifikate und des besagten weiteren Entity_Zertifikats an die besagte erneuerbare Einheit (400); und

Übermittlung eines Cross_Zertifikats an die besagte erneuerbare Einheit (400).

38. Das Verfahren nach Anspruch 25, wobei das besagte System ein Back-End-System (700) umfasst und wobei der Schritt der Verbindung weiter aus den folgenden Schritten besteht:

Erzeugung eines ID-Werts für die nicht erneuerbare Einheit (100);

Ermittlung von geheimen Informationen der nicht erneuerbaren Einheit (100) im Back-End-System (700) auf Basis des ID-Werts für die nicht erneuerbare Einheit (100); und

Übermittlung der geheimen Informationen an die besagte erneuerbare Einheit (400).

39. Das Verfahren nach Anspruch 32, weiter bestehend aus dem Schritt der Übermittlung der geheimen Informationen an die nicht erneuerbare Einheit (100), wenn die besagte nicht erneuerbare Einheit (100) die geheimen Informationen noch nicht enthält.

**40.** Das Verfahren nach Anspruch 38, wobei die nicht erneuerbare Einheit (100) eine Quellenanordnung (200) umfasst.

**41.** Das Verfahren nach Anspruch 39, wobei die nicht erneuerbare Einheit (100) eine Senkenanordnung (300) umfasst.

**42.** Das Verfahren nach Anspruch 25, wobei die besagte nicht erneuerbare Einheit (100) und die besagte erneuerbare Einheit (400) je eine Authentifizierungslogik (210, 414) enthalten und wobei der besagte Schritt der selektiven Authentifizierung von Nachrichten weiter aus den folgenden Schritten besteht:

Übermittlung einer Anfrage von der besagten nicht erneuerbaren Einheit (100) an die besagte erneuerbare Einheit (400);

Authentifizierung der in der besagten Anfrage und der in einer Antwort enthaltenen Informationen unter Verwendung eines gemeinsamen Geheimnisses, um damit eine Authentifizierungsnachricht der besagten erneuerbaren Einheit (400) zu erzeugen, wobei die besagte Antwort von der erneuerbaren Einheit (400) erzeugt wird;

Authentifizierung der in der Anfrage und der Antwort enthaltenen Informationen unter Verwendung des gemeinsamen Geheimnisses, um damit eine Authentifizierungsnachricht der nicht erneuerbaren Einheit zu erzeugen; und

Überprüfung, dass die Authentifizierungsnachricht der erneuerbaren Einheit mit der Authentifizierungsnachricht der nicht erneuerbaren Einheit übereinstimmt.

**43.** Das Verfahren nach Anspruch 42, wobei die besagte Anfrage einen beliebigen Wert und einen Titel eines bestimmten Programms der besagten Informationen enthält und die besagte Antwort keine Informationen enthält.

**44.** Das Verfahren nach Anspruch 42, weiter bestehend aus dem Schritt der Protokollierung des Zugriffs auf die besagten Informationen nach Übermittlung der Antwort an die nicht erneuerbare Einheit (100) durch die erneuerbare Einheit (400).

**45.** Das Verfahren nach Anspruch 42, wobei die nicht erneuerbare Einheit (100) weiter einen Frischegenerator (206) umfasst und das Verfahren weiter aus dem Schritt der Erzeugung des besagten beliebigen Werts besteht.

**46.** Das Verfahren nach Anspruch 45, wobei der Frischegenerator (206) einen Zähler umfasst und der besagte beliebige Wert ein Zählwert ist.

**47.** Das Verfahren nach Anspruch 45, wobei der Frischegenerator (206) einen Zufallszahlengenerator umfasst und der besagte beliebige Wert eine Zufallszahl ist.

**48.** Das Verfahren nach Anspruch 42, wobei die besagten Informationen verschlüsselt sind, die Nachricht einen Titel eines bestimmten Programms der besagten Informationen enthält, die nicht erneuerbare Einheit (100) eine Superverschlüsselungslogik (222c) umfasst und die erneuerbare Einheit (400) eine Superentschlüsselungslogik (422c) umfasst und wobei das Verfahren weiter aus den folgenden Schritten besteht: Superverschlüsselung der besagten Informationen in der besagten nicht erneuerbaren Einheit (100); Übermittlung der besagten superverschlüsselten Informationen an die besagte erneuerbare Einheit (400) und Entschlüsselung der besagten superverschlüsselten Informationen in der besagten erneuerbaren Einheit (400).

**49.** Das Verfahren nach Anspruch 43, wobei die erneuerbare Einheit (400) eine Entschlüsselungslogik (422c) umfasst und wobei das Verfahren weiter aus dem Schritt der Entschlüsselung der besagten Informationen an der besagten erneuerbaren Einheit (400) besteht.

**50.** Das Verfahren nach Anspruch 49, wobei die besagte nicht erneuerbare Einheit (100) eine Quellenanordnung (200) umfasst, die besagte erneuerbare Einheit (400) eine Neuverschlüsselungslogik umfasst und das besagte System weiter eine Senkenanordnung (300c) umfasst, die eine Entschlüsselungslogik (304c) enthält, und wobei das Verfahren weiter aus den folgenden Schritten besteht: Neuverschlüsselung der besagten entschlüsselten Informationen; Übermittlung der neuverschlüsselten Informationen an die Senkenanordnung (300c) und Entschlüsselung der besagten neuverschlüsselten Informationen.

**51.** Das Verfahren nach Anspruch 50, weiter bestehend aus dem Schritt der Ermittlung eines Schnittstellenverschlüsselungsschlüssels zur Verwendung beim besagten Schritt der Neuverschlüsselung und beim besagten Schritt der Entschlüsselung.

**52.** Das Verfahren nach Anspruch 51, wobei der besagte Schritt der Ermittlung eines Schnittstellenverschlüsselungsschlüssels weiter aus den folgenden Schritten besteht:

Übermittlung eines beliebigen Werts von der besagten Senkenanordnung (300c) an die besagte erneuerbare Einheit (400); unabhängige Ableitung des
Schnittstellenverschlüsselungsschlüssels unter Verwendung der im besagten beliebigen Wert der Senkenanordnung enthaltenen Informationen an der besagten erneuerbaren Einheit (400) und unabhängige Ableitung des Schnittstellenverschlüsselungsschlüssels unter Verwendung der im besagten beliebigen Wert der Senkenanordnung enthaltenen Informationen an der besagten Senkenanordnung (300c).

**53.** Das Verfahren nach Anspruch 48, weiter bestehend aus dem Schritt der Ermittlung eines beim besagten Schritt der Superverschlüsselung und beim besagten Schritt der Superentschlüsselung verwendeten Superverschlüsselungsschlüssels.

**54.** Das Verfahren nach Anspruch 53, wobei der Schritt der Ermittlung eines Superverschlüsselungsschlüssels weiter aus den folgenden Schritten besteht: Verwendung von Informationen auf Basis des besagten Titels eines bestimmten Programms zur Ermittlung des besagten Superverschlüsselungsschlüssels an der besagten erneuerbaren Einheit (400).

**55.** Das Verfahren nach Anspruch 48, wobei die besagte Nachricht weiter einen beliebigen Wert enthält und wobei das Verfahren weiter aus den folgenden Schritten besteht:

Übermittlung einer Medienanfrage von der erneuerbaren Einheit (400) an die nicht erneuerbare Einheit (100); Authentifizierung der in der besagten Medienanfrage und der in einer an der besagten nicht erneuerbaren Einheit (100) erzeugten Medienantwort enthaltenen Informationen, um dadurch eine medienauthentifizierte Nachricht der nicht erneuerbaren Einheit (100) zu erzeugen; Übermittlung der besagten Medienantwort und der besagten medienauthentifizierten Nachricht der nicht erneuerbaren Einheit (100) an die besagte erneuerbare Einheit (100); Authentifizierung der in der besagten Medienantwort und der in der Medienanfrage enthaltenen Informationen an der besagten erneuerbaren Einheit (400),
um dadurch eine medienauthentifizierte Nachricht der erneuerbaren Einheit (400) zu erzeugen; und Überprüfung der medienauthentifizierten Nachricht der nicht erneuerbaren Einheit anhand eines Vergleichs mit der besagten medienauthentifizierten Nachricht an der besagten erneuerbaren Einheit (400).

**56.** Das Verfahren nach Anspruch 55, wobei die Medienanfrage in der besagten Medienantwort enthalten ist.

**57.** Das Verfahren nach Anspruch 55, wobei die erneuerbare Einheit (400) einen Zähler zur Erzeugung eines Zählwerts der erneuerbaren Einheit (400) umfasst, der in der besagten Medienanfrage enthalten ist, und wobei das Verfahren weiter aus den folgenden Schritten besteht:

Inkrementierung des Zählwerts der besagten erneuerbaren Einheit (400) an der nicht erneuerbaren Einheit (100); und
Inkrementierung des Zählwerts der besagten erneuerbaren Einheit (400) an der erneuerbaren Einheit (400), wenn der Schritt der Überprüfung erfolgreich ist.

**58.** Das Verfahren nach Anspruch 55, wobei die erneuerbare Einheit (400) einen Zufallszahlengenerator zur Erzeugung eines beliebigen Werts der erneuerbaren Einheit (400) umfasst, der in der besagten Medienanfrage enthalten ist, und wobei das Verfahren weiter aus den folgenden Schritten besteht:

Inkrementierung des beliebigen Werts der besagten erneuerbaren Einheit (400) an der nicht erneuerbaren Einheit (100); und
Inkrementierung des beliebigen Werts der besagten erneuerbaren Einheit an der besagten erneuerbaren Einheit (400), wenn der Schritt der Überprüfung erfolgreich ist.

**EP 1 057 299 B1**

**Revendications**

1. Appareil pour empêcher l'accès non autorisé à des informations, comprenant :

   un dispositif non renouvelable (100) configuré pour recevoir les informations à traiter d'une source de données audio et/ou vidéo ; et
   un dispositif renouvelable (400) configuré pour être traité pour autoriser le dispositif non renouvelable (100) pour traiter les informations, ledit dispositif non renouvelable (100) étant couplé audit dispositif renouvelable (400) par un secret partagé, permettant ainsi à chacun du dispositif non renouvelable (100) et du dispositif renouvelable (400) de communiquer l'un avec l'autre,
   dans lequel le dispositif renouvelable (400) est configuré pour communiquer avec le dispositif non renouvelable (100) selon un protocole prédéterminé en utilisant le secret partagé,
   dans lequel ledit dispositif non renouvelable (100) comprend une logique de contrôle (208) générant un message d'interrogation, et une logique d'authentification (210) pour authentifier les informations contenues dans ledit message d'interrogation et les informations contenues dans un message de réponse en utilisant ledit secret partagé générant ainsi un message d'authentification de dispositif non renouvelable,
   dans lequel le dispositif renouvelable (400) comprend une logique d'authentification (414) pour authentifier les informations contenues dans le message d'interrogation et les informations dans le message de réponse en utilisant ledit secret partagé, générant ainsi un message d'authentification de dispositif renouvelable, le dispositif renouvelable (400) comprenant en outre une logique de contrôle (412) actionnable pour générer le message de réponse et pour fournir audit dispositif non renouvelable (100) ledit message de réponse et le message d'authentification du dispositif renouvelable, ladite logique de contrôle du dispositif non renouvelable (208) étant en outre actionnable pour mettre en correspondance le message d'authentification du dispositif renouvelable avec le message d'authentification du dispositif non renouvelable, et pour fournir au dispositif renouvelable (400) un programme spécifié si le message d'authentification du dispositif renouvelable correspond au message d'authentification du dispositif non renouvelable,
   dans lequel les informations sont chiffrées et le dispositif non renouvelable (100) comprend une sortie pour délivrer les informations au dispositif renouvelable (400), et dans lequel le dispositif renouvelable (400) comprend une logique de déchiffrement (408) pour déchiffrer les informations, et une sortie pour délivrer les informations déchiffrées au dispositif non renouvelable (100), et
   dans lequel ledit dispositif non renouvelable (100) et ledit dispositif renouvelable (400) comprennent chacun un dispositif logique de fenêtre d'accès (212a, 416a) générant une fenêtre d'accès, dans lequel l'accès auxdites informations est limité à la plus courte des fenêtres d'accès générées par lesdits dispositifs logiques de fenêtre d'accès (212a, 416a).

2. Appareil selon la revendication 1 dans lequel le dispositif renouvelable (400) enregistre l'accès auxdites informations après avoir fourni le message de réponse audit dispositif non renouvelable (100).

3. Appareil selon la revendication 1 dans lequel ledit message d'interrogation comprend au moins un élément parmi une valeur arbitraire et un titre dudit programme spécifié.

4. Appareil selon la revendication 3 comprenant en outre un générateur de fraîcheur (206) associé au dispositif non renouvelable (100) pour générer ladite valeur arbitraire.

5. Appareil selon la revendication 4 dans lequel ledit générateur de fraîcheur (206) comprend un compteur.

6. Appareil selon la revendication 4 dans lequel ledit générateur de fraîcheur (206) comprend un générateur de nombres aléatoires.

7. Appareil selon la revendication 1 dans lequel les informations sont chiffrées, et ledit dispositif non renouvelable (100) comprend en outre une logique de surchiffrement (222c) pour surchiffrer les informations ; et
   dans lequel ledit dispositif renouvelable (400) comprend en outre une logique de surdéchiffrement (422c) pour surdéchiffrer les informations surchiffrées, et une logique de déchiffrement pour déchiffrer les informations.

8. Appareil selon la revendication 7 dans lequel ledit dispositif renouvelable (400) comprend en outre une logique de chiffrement d'interface (426c) pour rechiffrer les informations déchiffrées, et dans lequel ledit dispositif non renouvelable (100) comprend en outre une logique de déchiffrement d'interface (304c) pour déchiffrer les informations rechiffrées.

30

9. Appareil selon la revendication 8 dans lequel lesdites informations comprennent un programme spécifié devant être consulté, et dans lequel ledit dispositif non renouvelable (100) comprend une logique de contrôle (306c) actionnable pour générer un message, ledit dispositif renouvelable (400) comprenant une logique de contrôle actionnable pour déterminer une clé de surdéchiffrement à partir dudit message, et pour négocier des clés pour le surdéchiffrement et le rechiffrement.

10. Appareil selon la revendication 9 dans lequel ledit dispositif non renouvelable (100) comprend une source (200c) actionnable pour générer ledit message, ladite source (200c) comprenant ladite logique de surchiffrement (222c) et ladite logique de contrôle (306c) ; et un puits (300c) actionnable pour négocier une clé de rechiffrement, ledit puits (300c) comprenant ladite logique de déchiffrement d'interface (304c) et ladite logique de contrôle (306c).

11. Appareil selon la revendication 10 dans lequel ladite source (200c) et ledit puits (300c) comprennent un dispositif intégré.

12. Appareil selon la revendication 10 dans lequel ladite source (200c) et ledit puits (300c) comprennent des dispositifs distincts.

13. Appareil selon la revendication 10 dans lequel ledit message comprend un titre dudit programme spécifié.

14. Appareil selon la revendication 10 dans lequel la logique de contrôle dudit dispositif renouvelable (400) détermine une clé de surdéchiffrement basée, au moins en partie, sur le contenu dudit message.

15. Appareil selon la revendication 8 dans lequel ledit dispositif non renouvelable (100) comprend une logique d'authentification de support de dispositif non renouvelable (224e) pour authentifier un support sur lequel les informations devant être consultées sont supportées, et ledit dispositif renouvelable (400) comprend une logique d'authentification de support (435e) pour authentifier le support.

16. Appareil selon la revendication 15 dans lequel le dispositif renouvelable (400) fournit une valeur arbitraire au dispositif non renouvelable (100).

17. Appareil selon la revendication 16 comprenant en outre un générateur de fraîcheur (432e) associé audit dispositif renouvelable (400) pour générer ladite valeur arbitraire.

18. Appareil selon la revendication 17 dans lequel ledit générateur de fraîcheur (432e) comprend un compteur.

19. Appareil selon la revendication 17 dans lequel ledit générateur de fraîcheur (432e) comprend un générateur de nombres aléatoires.

20. Appareil selon la revendication 1 dans lequel ledit dispositif non renouvelable (100) comprend une logique d'authentification de support de dispositif non renouvelable (224e) pour authentifier un support sur lequel les informations devant être consultées sont supportées, et ledit dispositif renouvelable (400) comprend une logique d'authentification de support (435e) pour authentifier le support.

21. Appareil selon la revendication 20 dans lequel ledit dispositif renouvelable (400) fournit une valeur arbitraire audit dispositif non renouvelable (100).

22. Appareil selon la revendication 21 comprenant en outre un générateur de fraîcheur (432e) associé audit dispositif renouvelable (400) pour générer la valeur arbitraire.

23. Appareil selon la revendication 22 dans lequel ledit générateur de fraîcheur (432e) comprend un compteur.

24. Appareil selon la revendication 23 dans lequel ledit générateur de fraîcheur (432e) comprend un générateur de nombres aléatoires.

25. Procédé pour empêcher tout accès non autorisé à des informations d'une source de données audio et/ou vidéo, dans un système comprenant un dispositif non renouvelable (100) ayant une logique de contrôle et un dispositif renouvelable (400) ayant une logique de contrôle actionnable pour réaliser des opérations de traitement, dans lequel les informations sont chiffrées et le dispositif non renouvelable (100) comprend une sortie pour délivrer les informations au dispositif renouvelable (400), et dans lequel le dispositif renouvelable (400) comprend une logique de déchiffrement (408) pour déchiffrer les informations, et une sortie pour délivrer les informations déchiffrées au dispositif non renouvelable (100), le procédé comprenant les étapes consistant à :

coupler le dispositif non renouvelable (100) avec le dispositif renouvelable (400) en réalisant lesdites opérations de traitement sur ledit dispositif renouvelable (400) ;

authentifier sélectivement les messages échangés entre les dispositifs non renouvelable (100) et renouvelable (400) et envoyer un message authentifié basé sur lesdits messages sélectionnés à partir d'un desdits dispositifs non renouvelable et renouvelable (100, 400) à l'autre desdits dispositifs non renouvelable et renouvelable (100, 400) ;

vérifier le message authentifié dans l'autre desdits dispositifs non renouvelable et renouvelable (100, 400) ; et autoriser l'accès auxdites informations,

dans lequel ledit dispositif non renouvelable (100) et ledit dispositif renouvelable (400) comprennent chacun un dispositif logique de fenêtre d'accès (212a, 416a) pour régler une quantité de fenêtre d'accès restante, et comprenant en outre les étapes consistant à : générer une fenêtre d'accès au dispositif non renouvelable (100) ; générer une fenêtre d'accès au dispositif renouvelable (400) ; et limiter l'accès à la plus courte des fenêtres d'accès générées aux dispositifs non renouvelable et renouvelable (100, 400).

26. Procédé selon la revendication 25 dans lequel ladite étape de couplage comprend en outre les étapes consistant à :

générer une valeur ID pour le dispositif non renouvelable (100) ;

générer une valeur ID pour le dispositif renouvelable (400) ;

générer au moins un certificat basé sur la valeur ID pour ledit dispositif non renouvelable (100) et la valeur ID pour ledit dispositif renouvelable (400) ; et

envoyer ledit au moins un certificat à au moins un des dispositifs non renouvelable et renouvelable (100, 400).

27. Procédé selon la revendication 26 dans lequel ladite valeur ID pour ledit dispositif renouvelable (400) comprend une clé publique.

28. Procédé selon la revendication 26 dans lequel l'étape consistant à générer la valeur ID pour le dispositif non renouvelable (100) comprend en outre l'envoi de la valeur ID au dispositif renouvelable (400).

29. Procédé selon la revendication 26 dans lequel ledit système comprend un système dorsal (700) et dans lequel l'étape consistant à générer un certificat comprend en outre la génération dudit certificat au système dorsal (700).

30. Procédé selon la revendication 29 dans lequel ledit au moins un certificat lie la valeur ID du dispositif non renouvelable (100) au dispositif renouvelable (400).

31. Procédé selon la revendication 29 dans lequel ledit au moins un certificat lie la valeur ID du dispositif renouvelable (400) audit dispositif non renouvelable (100).

32. Procédé selon la revendication 29 dans lequel ledit au moins un certificat lie une clé publique de dispositif non renouvelable à la valeur ID du dispositif non renouvelable.

33. Procédé selon la revendication 32 comprenant en outre l'étape consistant à fournir ledit au moins un certificat au dispositif non renouvelable (100) si le dispositif non renouvelable (100) ne contient pas ledit au moins un certificat.

34. Procédé selon la revendication 32 dans lequel ledit au moins un certificat lie une clé publique de dispositif renouvelable à la valeur ID du dispositif renouvelable.

35. Procédé selon la revendication 26 dans lequel le dispositif non renouvelable (100) comprend un dispositif de source (200).

36. Procédé selon la revendication 26 dans lequel le dispositif non renouvelable (100) comprend un dispositif de puits (300).

37. Procédé selon la revendication 25 dans lequel ledit système comprend un système dorsal (700) et ladite étape de couplage comprend en outre les étapes consistant à :

générer une valeur ID pour le dispositif non renouvelable (100) ;
déterminer si le dispositif non renouvelable (100) contient un Certificat_d'entité ;
envoyer ledit Certificat_d'entité audit dispositif renouvelable (400) et au système dorsal (700) ;
déterminer si ledit système dorsal (700) contient un autre Certificat_d'entité ;
envoyer audit dispositif renouvelable (400) un dudit Certificat_d'entité et dudit autre Certificat d'entité ; et
envoyer audit dispositif renouvelable (400) un Certificat_croisé.

**38.** Procédé selon la revendication 25 dans lequel ledit système comprend un système dorsal (700) et ladite étape de couplage comprend en outre les étapes consistant à :

générer une valeur ID pour le dispositif non renouvelable (100) ;
déterminer les informations secrètes du dispositif non renouvelable (100) dans le système dorsal (700) sur la base de la valeur ID pour le dispositif non renouvelable (100) ; et
envoyer les informations secrètes audit dispositif renouvelable (400).

**39.** Procédé selon la revendication 32 comprenant en outre l'étape consistant à fournir audit dispositif non renouvelable (100) les informations secrètes si ledit dispositif non renouvelable (100) ne contient pas les informations secrètes.

**40.** Procédé selon la revendication 38 dans lequel le dispositif non renouvelable (100) comprend un dispositif de source (200).

**41.** Procédé selon la revendication 39 dans lequel le dispositif non renouvelable (100) comprend un dispositif de puits (300).

**42.** Procédé selon la revendication 25 dans lequel chacun des dispositifs non renouvelable et renouvelable (100, 400) comprend une logique d'authentification (210, 414), et dans lequel ladite étape consistant à authentifier sélectivement les messages comprend en outre les étapes consistant à :

envoyer un message d'interrogation dudit dispositif non renouvelable (100) audit dispositif renouvelable (400) ;
authentifier les informations contenues dans ledit message d'interrogation et les informations dans un message de réponse en utilisant un secret partagé, générant ainsi un message d'authentification de dispositif renouvelable, ledit message de réponse étant généré par le dispositif renouvelable (400) ;
authentifier les informations contenues dans le message d'interrogation et les informations contenues dans le message de réponse en utilisant ledit secret partagé, générant ainsi un message d'authentification de dispositif non renouvelable ; et
vérifier que ledit message d'authentification du dispositif renouvelable correspond audit message d'authentification du dispositif non renouvelable.

**43.** Procédé selon la revendication 42 dans lequel ledit message d'interrogation comprend une valeur arbitraire et un titre d'un programme spécifié desdites informations, et ledit message de réponse contient les informations.

**44.** Procédé selon la revendication 42 comprenant en outre l'étape consistant à enregistrer l'accès auxdites informations après la fourniture du message de réponse audit dispositif non renouvelable (100) par le dispositif renouvelable (400).

**45.** Procédé selon la revendication 42 dans lequel le dispositif non renouvelable (100) comprend en outre un générateur de fraîcheur (206) et comprenant en outre l'étape consistant à générer ladite valeur arbitraire.

**46.** Procédé selon la revendication 45 dans lequel le générateur de fraîcheur (206) comprend un compteur et ladite valeur arbitraire est une valeur de comptage.

**47.** Procédé selon la revendication 45 dans lequel le générateur de fraîcheur (206) comprend un générateur de nombres aléatoires et ladite valeur arbitraire est un nombre aléatoire.

**48.** Procédé selon la revendication 42 dans lequel lesdites informations sont chiffrées, le message comprend un titre d'un programme spécifié desdites informations, le dispositif non renouvelable (100) comprend une logique de surchiffrement (222c), et le dispositif renouvelable (400) comprend une logique de surdéchiffrement (422c), et comprenant en outre les étapes consistant à : surchiffrer lesdites informations dans ledit dispositif non renouvelable (100) ; fournir lesdites informations surchiffrées audit dispositif renouvelable (400) ; et déchiffrer lesdites informations surchiffrées dans ledit dispositif renouvelable (400).

49. Procédé selon la revendication 43 dans lequel le dispositif renouvelable (400) comprend une logique de déchiffrement (422c), et comprenant en outre l'étape consistant à : déchiffrer lesdites informations audit dispositif renouvelable (400).

50. Procédé selon la revendication 49 dans lequel ledit dispositif non renouvelable (100) comprend un dispositif de source (200), ledit dispositif renouvelable (400) comprend une logique de rechiffrement, et ledit système comprend en outre un dispositif de puits (300c) qui comprend une logique de déchiffrement (304c), et comprenant en outre les étapes consistant à : rechiffrer lesdites informations déchiffrées ; fournir les informations rechiffrées au dispositif de puits (300c) ; et déchiffrer lesdites informations rechiffrées.

51. Procédé selon la revendication 50 comprenant en outre l'étape consistant à :

déterminer une clé de chiffrement d'interface destinée à être utilisée dans ladite étape de rechiffrement et ladite étape de déchiffrement.

52. Procédé selon la revendication 51 dans lequel ladite étape consistant à déterminer une clé de chiffrement d'interface comprend en outre les étapes consistant à : envoyer une valeur arbitraire de puits dudit dispositif de puits (300c) audit dispositif renouvelable (400) ; dériver indépendamment la clé de chiffrement d'interface en utilisant les informations contenues dans ladite valeur arbitraire de puits audit dispositif renouvelable (400) ; et dériver indépendamment la clé de chiffrement d'interface en utilisant les informations contenues dans ladite valeur arbitraire de puits audit dispositif de puits (300c).

53. Procédé selon la revendication 48 comprenant en outre les étapes consistant à : déterminer une clé de surchiffrement utilisée dans ladite étape de surchiffrement et ladite étape de surdéchiffrement.

54. Procédé selon la revendication 53 dans lequel l'étape consistant à déterminer une clé de surchiffrement comprenant en outre les étapes consistant à : utiliser des informations basées sur ledit titre d'un programme spécifié pour déterminer ladite clé de surchiffrement audit dispositif renouvelable (400).

55. Procédé selon la revendication 48 dans lequel ledit message comprend en outre une valeur arbitraire, et comprenant en outre les étapes consistant à : envoyer un message d'interrogation de support du dispositif renouvelable (400) au dispositif non renouvelable (100) ;
authentifier les informations contenues dans ledit message d'interrogation de support et les informations contenues dans un message de réponse de support généré audit dispositif non renouvelable (100) générant ainsi un message authentifié de support de dispositif non renouvelable ; envoyer ledit message de réponse de support et ledit message authentifié de support de dispositif non renouvelable audit dispositif renouvelable (100) ; authentifier les informations contenues dans ledit message de réponse de support et les informations contenues dans ledit message d'interrogation de support audit dispositif renouvelable (400) générant ainsi un message authentifié de support de dispositif renouvelable ; et vérifier ledit message authentifié de support de dispositif non renouvelable avec ledit message authentifié de support de dispositif renouvelable audit dispositif renouvelable (400).

56. Procédé selon la revendication 55 dans lequel le message d'interrogation de support est contenu dans ledit message de réponse.

57. Procédé selon la revendication 55 dans lequel le dispositif renouvelable (400) comprend un compteur pour générer une valeur de comptage de dispositif renouvelable qui est incluse dans ledit message d'interrogation de support, et comprenant en outre les étapes consistant à :

incrémenter ladite valeur de comptage du dispositif renouvelable au dispositif non renouvelable (100) ; et incrémenter ladite valeur de comptage du dispositif renouvelable au dispositif renouvelable (400) si l'étape de vérification est réussie.

58. Procédé selon la revendication 55 dans lequel le dispositif renouvelable (400) comprend un générateur de nombres aléatoires pour générer une valeur aléatoire de dispositif renouvelable qui est incluse dans ledit message d'interrogation du support, et comprenant en outre les étapes consistant à : incrémenter ladite valeur aléatoire du dispositif renouvelable audit dispositif non renouvelable (100) ; et incrémenter ladite valeur aléatoire du dispositif renouvelable audit dispositif renouvelable (400) si ladite étape de vérification est réussie.

# FIG. 1

EP 1 057 299 B1

# FIG. 2

37

# FIG. 3

START
Source

START
CAM

START
Backend

**S301** Send to the CAM Source_ID

**S303** Receive from the Source Source_ID

**S304** Send to the Backend CAM_ID, Source_ID

**S308** Receive from the CAM CAM_ID, Source_ID

**S309** Generate CAM_Priv, CAM_Pub

**S310** Generate Cross-Certificate

**S305** Receive from the Backend CAM_Priv

◄secure—

**S311** Send to the CAM CAM_Priv

**S306** Receive from the Backend Cross-Certificate

**S312** Send to the CAM Cross-Certificate

**S302** Receive from the CAM Cross-Certificate

**S307** Send to the Source Cross-Certificate

STOP

STOP

STOP

38

EP 1 057 299 B1

# FIG. 4

START
Sink

START
CAM

START
Backend

**S401** Send to the CAM Sink_ID

**S404** Receive from the Sink Sink_ID

**S402** Is there a local Entity-Certificate ?  — No / Yes

**S405** Send to the Backend CAM_ID, Sink_ID

**S410** Receive from the CAM CAM_ID, Sink_ID

**S403** Send to the CAM Entity-Certificate

**S406** Receive from the Sink Entity-Certificate

**S407** Send to the Backend Entity-Certificate Info.

**S411** Receive from to the CAM Entity-Certificate Info.

**S412** Is there a local Entity-Certificate ? — No

Yes

**S413** Does it supersede the remote Entity-Certificate ? — No

Yes

**S408** Receive from the Backend Entity-Certificate

**S414** Send to the CAM Entity-Certificate

**S415** Generate Cross-Certificate

**S409** Receive from the Backend Cross-Certificate

**S416** Send to the CAM Cross-Certificate

STOP

STOP

STOP

## FIG. 5

```
┌─────────────┐         ┌─────────────┐         ┌─────────────┐
│   START     │         │   START     │         │   START     │
│   Sink      │         │    CAM      │         │  Backend    │
└──────┬──────┘         └──────┬──────┘         └──────┬──────┘
       │         S501          │        S502           │
┌──────▼──────────┐   ┌────────▼────────┐              │
│ Send to the CAM │═══│ Receive from the Sink│          │
│    Sink_ID      │   │     Sink_ID     │              │
└──────┬──────────┘   └────────┬────────┘              │
       │                       │        S503           │       S506
       │              ┌────────▼────────┐   ┌──────────▼──────────┐
       │              │ Send to the Backend│═│ Receive from the CAM│
       │              │ CAM_ID, Sink_ID │   │   CAM_ID, Sink_ID   │
       │              └────────┬────────┘   └──────────┬──────────┘
       │                       │                       │       S507
       │                       │            ┌──────────▼──────────┐
       │                       │            │ Use Sink_ID to look-up Sink_PUB│
       │                       │            └──────────┬──────────┘
       │                       │        S504           │       S508
       │              ┌────────▼────────┐   ┌──────────▼──────────┐
       │              │ Receive from the Backend│◄Secure│ Send to the CAM │
       │              │    Sink_PUB     │   │      Sink_PUB       │
       │              └────────┬────────┘   └──────────┬──────────┘
       │                       │                       │
┌──────▼──────┐         ┌──────▼──────┐         ┌──────▼──────┐
│    STOP     │         │    STOP     │         │    STOP     │
└─────────────┘         └─────────────┘         └─────────────┘
```

# FIG. 6

| START Source | START CAM | START Backend |
|---|---|---|
| **S601** Send to the CAM Source_ID | **S602** Receive from the Source Source_ID | |
| | **S603** Send to the Backend CAM_ID, Source_ID | **S605** Receive from the CAM CAM_ID, Source_ID |
| | | **S606** Use Source_ID to lookup Source_Secret |
| | **S604** Receive from the Backend Source_Secret ◄secure─ | **S607** Send to the CAM Source_Secret |
| STOP | STOP | STOP |

# FIG. 7

```
  START                    START                    START
  Source                   CAM                      Backend
    │                        │                        │
    │          S701          │          S703          │
    ▼                        ▼                        │
┌──────────────┐        ┌──────────────────┐          │
│ Send to the CAM│═════▶│ Receive from the Source│    │
│  Source_ID   │        │   Source_ID      │          │
└──────────────┘        └──────────────────┘          │
    │                        │          S704          │          S708
    │                        ▼                        ▼
    │                   ┌──────────────────┐     ┌──────────────────┐
    │                   │ Send to the Backend│══▶│ Receive from the CAM│
    │                   │ CAM_ID, Source_ID │     │ CAM_ID, Source_ID │
    │                   └──────────────────┘     └──────────────────┘
    │                        │                        │          S709
    │                        │                        ▼
    │                        │                   ┌──────────────────┐
    │                        │                   │ Generate Source_Secret│
    │                        │                   └──────────────────┘
    │                        │          S705          │          S710
    │                        ▼                        ▼
    │                   ┌──────────────────┐     ┌──────────────────┐
    │                   │ Receive from Backend│◀─secure─│ Send to CAM   │
    │                   │  Source_Secret   │     │ Source_Secret    │
    │                   └──────────────────┘     └──────────────────┘
    │                        │                        │          S711
    │                        │                        ▼
    │                        │                   ┌──────────────────┐
    │                        │                   │    Generate      │
    │                        │                   │ (Source_Secret)_Source│
    │                        │                   └──────────────────┘
    │                        │          S706          │          S712
    │                        ▼                        ▼
    │                   ┌──────────────────┐     ┌──────────────────┐
    │                   │ Receive from Backend│◀──│  Send to CAM     │
    │                   │ (Source_Secret)_Source│   │ (Source_Secret)_Source│
    │                   └──────────────────┘     └──────────────────┘
    │          S702          │          S707          │
    ▼                        ▼                        │
┌──────────────────┐    ┌──────────────────┐          │
│ Receive from CAM │◀───│  Send to Source  │          │
│(Source_Secret)_Source│ │(Source_Secret)_Source│      │
└──────────────────┘    └──────────────────┘          │
    │                        │                        │
    ▼                        ▼                        ▼
  STOP                     STOP                     STOP
```

# FIG. 8

```
START              START              START
Sink               CAM                Backend
  |                  |                  |
  v        S801      v        S802      |
┌─────────────┐   ┌─────────────────┐  |
│ Send to the │──▶│ Receive from    │  |
│ CAM         │   │ the Source      │  |
│ Sink_ID     │   │ Sink_ID         │  |
└─────────────┘   └─────────────────┘  |
  |                  |        S803      v        S805
  |                ┌─────────────────┐ ┌──────────────────┐
  |                │ Send to the     │▶│ Receive from the │
  |                │ Backend         │ │ CAM              │
  |                │ CAM_ID, Sink_ID │ │ CAM_ID, Sink_ID  │
  |                └─────────────────┘ └──────────────────┘
  |                  |                  |        S806
  |                  |                ┌──────────────────────┐
  |                  |                │ Use Sink_ID to lookup│
  |                  |                │ Sink_Secret          │
  |                  |                └──────────────────────┘
  |                  |        S804      |        S807
  |                ┌─────────────────┐ ┌──────────────────┐
  |                │ Receive from the│◀│ Send to the CAM  │
  |                │ Backend         │ │ Sink_Secret      │
  |                │ Sink_Secret     │◀secure─           │
  |                └─────────────────┘ └──────────────────┘
  v                  v                  v
┌─────────┐       ┌─────────┐       ┌─────────┐
│  STOP   │       │  STOP   │       │  STOP   │
└─────────┘       └─────────┘       └─────────┘
```

# FIG. 9

| START<br>Sink | START<br>CAM | START<br>Backend |
|---|---|---|

**S901**
Send to the CAM
Sink_ID

**S903**
Receive from the Source
Sink_ID

**S904**
Send to the Backend
CAM_ID, Sink_ID

**S908**
Receive from the CAM
CAM_ID, Sink_ID

**S909**
Generate Sink_Secret

**S905**
Receive from Backend
Sink_Secret

←secure—

**S910**
Send to CAM
Sink_Secret

**S911**
Generate
$(Sink\_Secret)_{Sink}$

**S906**
Receive from Backend
$(Sink\_Secret)_{Sink}$

**S912**
Send to CAM
$(Sink\_Secret)_{Sink}$

**S902**
Receive from CAM
$(Sink\_Secret)_{Sink}$

**S907**
Send to Source
$(Sink\_Secret)_{Sink}$

| STOP | STOP | STOP |
|---|---|---|

# FIG. 10

**204**  **200**  **206**  **408**  **400**  **410**  **300**

Source

| Information | Freshness Generator |

Source Control Logic

| Authentication Logic | Access Window Logic |

CAM

| CA Decrypt logic | Timer |

CAM Control Logic

| Authentication Logic | Access Window Logic |

Sink

STB

**208**  **210**  **212**  **412**  **414**  **416**

**100**

# FIG. 11

```
   START                    START                    START
   Source                    CAM                      Sink
```

S1101 — Send to the CAM counter, title
S1108 — Receive from the Source counter, title

S1109 — Authenticate(counter, title)

S1102 — Receive from the CAM Authenticate(counter, title)
S1110 — Send to the Source Authenticate(counter, title)

S1103 — Authenticate(counter, title)

S1104 — Reset the access window
S1111 — Reset the access window

S1112 — Log Play

S1105 — Authentications match ? — No / Yes

S1106 — Send to the CAM CA(Information)
S1113 — Receive from the Source CA(Information)

S1114 — Decrypt Information from CA(Information)

S1115 — Send to the Sink Information
S1117 — Receive from the CAM Information

S1107 — Has the content window expired?
S1116 — Has the content window expired? — No / Yes

```
   STOP                     STOP                     STOP
```

# FIG. 12

START
Source

START
CAM

**S1201**
Send to the CAM
Time Remaining request,
counter, title

**S1207**
Receive from the Source
Time Remaining request,
counter, title

**S1208**
Authenticate(counter,actual time remaining)

**S1202**
Receive from the CAM
actual time remaining
Authenticate(counter, actual time remaining)

**S1209**
Send to the Source
actual time remaining,
Authenticate(counter, actual time remaining)

**S1203**
Authenticate(counter, actual time remaining)

**S1204**
Authentications
match
?

Yes

No

**S1205**
TimeRemaining = YES

**S1206**
TimeRemaining = NO

STOP

STOP

## FIG. 13

# FIG. 14

```
  ┌──────────┐           ┌──────────┐           ┌──────────┐
  │  START   │           │  START   │           │  START   │
  │  Source  │           │   CAM    │           │   Sink   │
  └────┬─────┘           └────┬─────┘           └────┬─────┘
```

**S1401**
Send to the CAM
counter, title,
request for ProcessWindow

**S1408**
Receive from the Source
counter, title,
request for ProcessWindow

**S1409**
Authenticate(counter,ProcessWindow,
title)

**S1402**
Receive from the CAM
Authenticate(counter,ProcessWindow,
title)

**S1410**
Send to the Source
Authenticate(counter,ProcessWindow,
title), ProcessWindow

**S1403**
Authenticate(counter,ProcessWindow,
title)

**S1411**
Log play of ProcessWindow

**S1404**
Authentications
match
?

No

**S1412**
Extend AccessWindow by
ProcessWindow

Yes

**S1405**
Extend AccessWindow by
ProcessWindow

**S1406**
Send to the CAM
CA(information)

**S1413**
Receive from the Source
CA(information)

**S1414**
Decrypt content_data
from CA(information)

**S1415**
Send to the SINK
information

**S1417**
Receive from the CAM
information

**S1407**
Has AccessWindow
expired?

No

**S1416**
Has AccessWindow
expired?

No

Yes          Yes

```
  ┌──────────┐           ┌──────────┐           ┌──────────┐
  │   STOP   │           │   STOP   │           │   STOP   │
  └──────────┘           └──────────┘           └──────────┘
```

# FIG. 15

```
┌─────────────┐                          ┌─────────────┐
│   START     │                          │   START     │
│   Source    │                          │    CAM      │
└──────┬──────┘                          └──────┬──────┘
       │                                        │
       │                  S1501                 │                  S1502
┌──────▼────────────────────┐         ┌─────────▼──────────────────┐
│     Send to the CAM        │────────▶│   Receive from the Source  │
│     RequestForCredit,      │         │     RequestForCredit,      │
│Authenticate(counter+1,     │         │Authenticate(counter+1,     │
│     RequestForCredit)      │         │     RequestForCredit)      │
└──────┬─────────────────────┘         └─────────┬──────────────────┘
       │                                          │           S1503
       │                               ┌──────────▼──────────────────┐
       │                               │Authenticate(counter+1,       │
       │                               │    RequestForCredit)         │
       │                               └──────────┬──────────────────┘
       │                                          │          S1504
       │                                  ┌────────▼────────┐
       │                                  │  Authentications│
       │             No ◀─────────────────│      Match      │
       │                                  │        ?        │
       │                                  └────────┬────────┘
       │                                          Yes
       │                                           │          S1505
       │                               ┌───────────▼──────────────────┐
       │                               │    Log the RequestForCredit   │
       │                               └───────────┬──────────────────┘
       │                                           │
┌──────▼──────┐                          ┌─────────▼──────┐
│    STOP     │                          │     STOP       │
└─────────────┘                          └────────────────┘
```

50

## FIG. 16

# FIG. 17

| 204c | 200c | 222c | 422c | 408c | 400c | 426c | 304c | 300c | 500 |
|------|------|------|------|------|------|------|------|------|-----|

| Source | | | CAM | | | | Sink | | Output Device |
|--------|--|--|-----|--|--|--|------|--|---------------|
| Information | Super Encrypt | | Super Decrypt | CA Decrypt | Interface Encrypt | | Interface Decrypt | | |
| Source Control Logic | | | CAM Control Logic | | | | Sink Control Logic | | |

208c

412c

306c

Backend System

700

# FIG. 18

| START Source | START CAM | START Sink |
|---|---|---|

**S1801** Send to the CAM Title

**S1804** Receive from the Source Title

**S1805** Use Title to key the decryptor

**S1802** Super-encrypt(CA(Information))

**S1806** Make a log entry of theTitle

**S1807** Receive from the Sink SinkCounter

**S1814** Send to the CAM SinkCounter

**S1808** Derive a CAM/Sink session key

**S1815** Derive a CAM/Sink session key

**S1803** Send to the CAM Super-encrypt(CA(Information))

**S1809** Receive from the Source Super-encrypt(CA(Information))

**S1810** Super-decrypt the Super-encrypt(CA(Information))

**S1811** CA-decrypt the CA(Information)

**S1812** Re-encrypt the Information using the CAM/Sink session key

**S1813** Send to the Sink Re-encrypted Information

**S1816** Receive from the CAM Re-encrypted Information

**S1817** Decrypt the Information using the CAM/Sink session key

| STOP | STOP | STOP |
|---|---|---|

# FIG. 19

# FIG. 20

# FIG. 21

**204e**     **200e**   **206e**   **208e**      **412e**      **400e**      **432e**        **300e**

| Source | CAM | Sink |

Information | Freshness Generator

Source Control Logic

Authentication Logic | Media-Authentication

Freshness Generator

CAM Control Logic

Authentication Logic | Media-Authentication

**210e**      **224e**

**414e**      **435e**

EP 1 057 299 B1

# FIG. 22

```
        ┌──────────────┐                    ┌──────────────┐
        │    START     │                    │    START     │
        │   Source     │                    │     CAM      │
        └──────┬───────┘                    └──────┬───────┘
               │                                   │
               ▼              S2201                ▼              S2208
        ┌──────────────┐              ┌──────────────────────┐
        │ Send to the CAM │─────────►│ Receive from the Source │
        │   Counter     │            │       Counter          │
        └──────────────┘            └──────────┬─────────────┘
                                               │              S2209
                                               ▼
                                    ┌──────────────────────────────┐
                                    │ Authenticate(counter, cam-counter) │
                                    └──────────┬───────────────────┘
               ▼              S2202                ▼              S2210
        ┌──────────────────────┐      ┌──────────────────────────────┐
        │ Receive from the CAM   │◄───│      Send to the Source        │
        │   cam-counter,         │    │        cam-counter,            │
        │ Authenticate(counter, cam-counter) │ Authenticate(counter, cam-counter) │
        └──────────┬───────────┘      └──────────────┬───────────────┘
                   │       S2203                      │
                   ▼                                  │
        ┌──────────────────────────────┐             │
        │ Authenticate(counter, cam-counter) │        │
        └──────────┬───────────────────┘             │
                   │        S2204                     │
                   ▼                                  │
            ╱─────────────╲                           │
     No ───╱ Authentication ╲                         │
           ╲    match        ╱                        │
            ╲      ?        ╱                          │
             ╲─────────────╱                           │
                   │                                   │
                  Yes        S2205                     ▼              S2211
        ┌──────────────────────────────┐   ┌──────────────────────────────┐
        │ Authenticate(cam-counter, title) │ │ Authenticate(cam-counter, title) │
        └──────────┬───────────────────┘   └──────────────┬───────────────┘
                   │        S2206                          │        S2212
                   ▼                                       ▼
        ┌──────────────────────────────┐   ┌──────────────────────────────┐
        │      Send to the CAM          │──►│    Receive from the Source     │
        │ Authenticate(cam-counter, title) │ │ Authenticate(cam-counter, title) │
        └──────────┬───────────────────┘   └──────────────┬───────────────┘
                   │        S2207                          │        S2213
                   ▼                                       ▼
        ┌──────────────────────────────┐        ╱─────────────╲      S2214
        │   Increment cam-counter       │       ╱ Authentication ╲──Yes──►┌──────────────────────┐
        └──────────┬───────────────────┘       ╲    match        ╱        │ Increment cam-counter │
                   │                             ╲      ?        ╱         └──────────────────────┘
                   │                              ╲─────────────╱
                   │                                   │
                   │                                  No
                   ▼                                   ▼
        ┌──────────────┐                    ┌──────────────┐
        │    STOP      │                    │    STOP       │
        └──────────────┘                    └──────────────┘
```

57

# FIG. 23

```
        ┌──────────────┐                    ┌──────────────┐
        │    START     │                    │    START     │
        │    Source    │                    │     CAM      │
        └──────┬───────┘                    └──────┬───────┘
               │                                   │
               ▼            S2301                  ▼            S2305
        ┌──────────────┐◄───────────      ┌──────────────────┐
        │ Receive from the CAM │◄───       │  Send to the Source │
        │    Random    │                   │      Random      │
        └──────┬───────┘                   └──────┬───────────┘
               │                                  │
      ┌────────┼──────► S2302          ┌──────────┼─────► S2306
      │        ▼                       │          ▼
      │ ┌──────────────────┐           │ ┌──────────────────┐
      │ │ Authenticate(random, title) │ │ │ Authenticate(random, title) │
      │ └──────┬───────────┘           │ └──────┬───────────┘
      │        │          S2303        │        │          S2307
      │        ▼                       │        ▼
      │ ┌──────────────────┐           │ ┌──────────────────┐
      │ │ Send to the CAM  │──────────►  │ Receive from the Source │
      │ │ Authenticate(random, title) │  │ Authenticate(random, title) │
      │ └──────┬───────────┘           │ └──────┬───────────┘
      │        │          S2304        │        │          S2308        S2309
      │        ▼                       │        ▼                  ┌──────────────┐
      │ ┌──────────────────┐           │    ╱Authentication╲──Yes─►│ Increment random │
      │ │ Increment random │           │    ╲   match   ╱          └──────────────┘
      │ └──────────────────┘           │        ╲  ? ╱
      └────────────────────┘           │          │
                                       │          No
                                       │          ▼
                                       │   ┌──────────────┐
                                       │   │     STOP     │
                                       │   └──────────────┘
```

EP 1 057 299 B1

## FIG. 24

59

# FIG. 25

# FIG. 26

# FIG. 27

STB flow:
- START STB
- **S2701** Negotiate with the CAM Seed
- **S2702** Receive from the CAM Challenge$_{A,E}$ , Status$_A$
- **S2703** Are we in cryptographic sync ? — No / Yes
- **S2704** In packet sync ? — Yes / No
- **S2705** Sent to the CAM Request Packet Resync$_A$
- **S2706** Send to the CAM Response$_A$
- STOP

CAM flow:
- START CAM
- **S2707** Negotiate with the STB Seed
- **S2708** Send to the STB Challenge$_{A,E}$ , Status$_A$
- **S2709** Receive from the STB Request Packet Resync$_A$
- **S2710** Are we in cryptographic sync ? — No / Yes
- **S2711** Receive from the STB Response$_A$
- **S2712** Does the response verify ? — No / Yes
- **S2713** Decrement NACK counter
- STOP

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4748688 A, Schamir
- US 5481609 A, Cohen
- US 5461675 A, Diehl
- US 5778068 A, Johnson
- US 5448045 A, Clark
- US 5802176 A, Audebert
- US 4935962 A
- US 9606504 B
- US 5694471 A
- US 5288978 A
- US 9738530 B
- US 9730534 B
- US 5440631 A, Akiyama
- US 5822291 A
- US 4200770 A
- US 4405829 A

**Non-patent literature cited in the description**

- **T. EI GAMAL.** A Public Key Crypitosystem And A Signature Scheme Based On Discrete Logarithms. *Advances In Cryptology,* 1985
- **SELIM G. AKL.** Security of Compressed Encodings. *Advances In Cryptology (Proceedings of Crypto 83,* 1983
- **M. BELLARE et al.** Keying Hash Functions For Message Authentication. *Advances In Cryptology (Crypto '96,* 1996